(19) Europäisches Patentamt / European Patent Office / Office européen des brevets

(11) EP 4 403 350 B1

(12) EUROPEAN PATENT SPECIFICATION

(45) Date of publication and mention of the grant of the patent:
**05.03.2025 Bulletin 2025/10**

(21) Application number: **23152350.7**

(22) Date of filing: **19.01.2023**

(51) International Patent Classification (IPC):
***B32B 7/02*** *(2019.01)* ***B32B 27/08*** *(2006.01)*
***B32B 27/32*** *(2006.01)*

(52) Cooperative Patent Classification (CPC):
**B32B 7/02; B32B 27/08; B32B 27/32;**
**B32B 27/327;** B32B 2250/03; B32B 2250/242;
B32B 2270/00; B32B 2274/00; B32B 2307/31;
B32B 2307/40; B32B 2307/54; B32B 2307/558;
B32B 2307/72; B32B 2307/7376; B32B 2439/70;
(Cont.)

(54) **MULTILAYERED FILM**

MEHRSCHICHTFOLIE

FILM MULTICOUCHE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**24.07.2024 Bulletin 2024/30**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**

(74) Representative: **TBK**
**Bavariaring 4-6**
**80336 München (DE)**

(56) References cited:
**EP-A1- 3 885 137** **EP-A1- 4 116 091**
**US-A1- 2018 354 239**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2439/80

## Description

The present invention relates to a multilayered film comprising a skin layer (SKL), a core layer (CL) and a sealing layer (SL), wherein the sealing layer (SL) comprises (a) 70 to 95 wt%, based on the total weight of the sealing layer (SL), of a specific metallocene-catalysed multimodal polyethylene copolymer (MMCP) and (b) 5 to 30 wt%, based on the total weight of the sealing layer (SL), of a specific elastomer wherein components (a) and (b) add up to 100 wt%, with a beneficial combination of heat sealing and mechanical properties. The present invention furthermore relates to the use of said multilayered film as packing material, preferably for food and/or medical products.

Polyethylene based films are widely used everywhere in daily life, like packaging, due to their excellent cost / performance ratios. These films must obviously protect the contents of the package from damage and the environment.

However, due to increasing demands on the needs of the films, multilayer packaging is typically employed utilising different types of polymers.

One classical combination are polyester (e.g. PET)-polyolefin (PO) laminates. The PO is used for the sealing layer and the polyester triggers the mechanical and thermal residence. Such kind of structure served the needs in the last years, but although these structures can offer attractive properties, the recycling of such materials is difficult. Therefore, making the materials pure is preferred. In that manner, a packaging with 'mono-materials' is really appreciated.

In order to simplify the recycling process, purer materials (i.e. based on same kind of polymers) are required, meaning that the content of "contamination" (i.e. different polymer) needs to be below 10 wt%.

However, this imposes higher requirements on the performance of materials themselves. There is thus a need to produce multilayer films, which offer the opportunity for facile recycling, together with an attractive balance of properties, e.g. a multilayered material with balanced sealing, stiffness, toughness is highly desirable.

Different solutions are already known in the prior art.

EP 4 116 091 A1 relates to multilayer films comprising at least one layer (A), being a sealing layer, and one layer (B), with beneficial heat sealing and hot tack properties.

EP 0 575 465 A1 relates to heat sealable compositions suitable for film and film structures comprising: (a) from 30 to 70 wt% of a low melting polymer comprising an ethylene based copolymer having a density of from 0.88 g/cm$^3$ to 0.915 g/cm$^3$, a melt index of from 1.5 dg/min to 7.5 dg/min, a molecular weight distribution of no greater than 3.5, and a composition distribution breath index greater than 70 percent; and, (b), being different from (a), from 70 to 30 weight percent of a propylene based polymer having from 88 mol% to 100 mol% propylene and from 12 mol% to 0 mol% of an alpha-olefin other than propylene.

WO 2012/061168 A1 relates to a sealant composition, a method of producing the same, articles made therefrom, and a method for forming such articles. The sealant composition according to WO 2012/061168 comprises: (a) from 70 to 99.5 wt% of an ethylene/alpha-olefin interpolymer composition, based on the total weight of the sealant composition, wherein said ethylene/alpha-olefin interpolymer composition comprises an ethylene/alpha-olefin interpolymer, the ethylene/alpha-olefin interpolymer having a Comonomer Distribution Constant (CDC) in the range of from 15 to 250, and a density in the range of from 0.875 to 0.963 g/cm$^3$, a melt index (I2) in a range of from 0.2 to 20 g/10 minutes, and long chain branching frequency in the range of from 0.02 to 3 long chain branches (LCB) per 1000C; (b) from 0.5 to 30 wt% of a propylene/alpha-olefin interpolymer composition, wherein said propylene/alpha-olefin interpolymer composition comprises a propylene/alpha-olefin copolymer or a propylene/ethylene/butene terpolymer, wherein said propylene/alpha-olefin copolymer has a crystallinity in the range of from 1 wt% to 30 wt%, a heat of fusion in the range of from 2 Joules/gram to 50 Joules/gram, and a DSC melting point in the range of 25°C to 110°C.

WO 2008/104371 discloses multilayer film laminate which comprises a multilayer film with, in the given layer order, an inner layer (A), a core layer (B) and an outer layer (C), which is laminated to a substrate.

The inner layer (A) comprises a multimodal polyethylene composition, i.e. a bimodal linear low density polyethylene (LLDPE), having a density of 940 kg/m$^3$ or less, a molecular weight distribution Mw/Mn of at least 8 and a $MFR_2$ of 0.01 to 20 g/10 min when determined according to ISO 1133 (at 190°C and 2.16 kg load).

Preferably, the LLDPE comprises an ethylene-1-hexene copolymer, ethylene-1-octene copolymer or ethylene-1-butene copolymer.

Layer (C) comprises a LLDPE, which can be an unimodal or multimodal LLDPE. Moreover, the LLDPE can be znLLDPE or the LLDPE can be obtained by polymerization using a metallocene catalyst (mLLDPE). Both mLLDPE and znLLDPE alternatives are preferable. Also preferably, layer (C) may comprise a low-density polyethylene (LDPE) homo- or copolymer composition obtained by high-pressure polymerization.

Layer (B) can comprise or consists of the same polymer composition as used in layer (A) or layer (C).

Borstar® FB2310 or Borstar® FB2230 as commercial grades of LLDPE's are given as examples as feasible multimodal LLDPE grades for at least layer (A) and, if present, for optional layer(s), such as layer (B).

Film properties, like sealing initiation temperature (SIT) or hot tack force are not mentioned at all.

WO 2006/037603 discloses a 3-layer structure, wherein the outer layers comprise LLDPE, preferably unimodal LLDPE, especially unimodal mLLDPE. The LLDPE is preferably a C2/C6-copolymer. One or both outer layers may contain

LDPE.

It is further disclosed, that a specific film may comprise a first outer layer comprising a unimodal LLDPE and LDPE blend with the other outer layer being formed from multimodal LLDPE optionally combined with an LDPE component.

The core layer comprises a multimodal polyethylene component having a lower molecular weight component and a higher molecular weight component, i.e. a multimodal LLDPE.

Thus, the multimodal PE comprises a higher molecular weight component, which preferably corresponds to an ethylene copolymer and a lower molecular weight component, which corresponds to an ethylene homopolymer or copolymer. Such 3-layer films are especially suitable for producing pouches.

Film properties, like sealing initiation temperature (SIT) or hot tack force are not mentioned at all.

For packaging companies it is of utmost importance to reduce the sealing initiation temperature (SIT) of a packaging film. Even more in the view of a sustainable and circular approach, low sealing temperature and higher hot tack force (HTF) are required. Lower SIT and higher HTF allows running the packaging lines faster and/or at lower temperatures, thus saving costs and energy.

Starting therefrom it was an objective of the present invention to provide multilayer films having a low SIT as well as a higher HTF than the multilayer films known from the prior art.

Such multilayered film should be furthermore easy to recycle and in addition have very good mechanical properties and acceptable optical properties.

These objects have been solved by the multilayered film according to claim 1 comprising

a skin layer (SKL), a core layer (CL) and a sealing layer (SL); wherein the sealing layer (SL) comprises

(a) 70 to 95 wt%, based on the total weight of the sealing layer (SL), of a metallocene-catalysed multimodal polyethylene copolymer (MMCP), which consists of an in-situ blend of

(i) 30.0 to 70.0 wt%, based on the total weight of MMCP, of an ethylene-1-butene polymer component (A) and

(ii) 70.0 to 30.0 wt%, based on the total weight of MMCP, of an ethylene-1-hexene polymer component (B); wherein

the ethylene-1-butene polymer component (A) has

- a density (ISO 1183) in the range of 930 to 955 kg/m$^3$;
- a $MFR_2$ (190°C, 2.16 kg, ISO 1133) in the range of 5.0 to 300 g/10 min; and

the ethylene-1-hexene polymer component (B) has

- a density (ISO 1183) in the range of 880 to 915 kg/m$^3$;
- a $MFR_2$ (190°C, 2.16 kg, ISO 1133) in the range of 0.001 to 0.1 g/10 min; and

the metallocene-catalysed multimodal polyethylene copolymer (MMCP) has

- a density (ISO 1183) in the range of 910 to 930 kg/m$^3$;
- a $MFR_2$ (190°C, 2.16 kg, ISO 1133) in the range of 0.1 to 3.0 g/10 min; and
- a ratio of the $MFR_{21}$ (190°C, 21.6 kg, ISO 1133) to $MFR_2$ (190°C, 2.16 kg, ISO 1133), $MFR_{21}/MFR_2$, in the range of 15 to 70; and

(b) 5 to 30 wt%, based on the total weight of the sealing layer (SL), of an elastomer being a terpolymer of propylene, ethylene and 1-butene having

- a density (ASTM D1505) in the range of 860 to 875 kg/m$^3$;
- a $MFR_2$ (230°C, 2.16 kg, ASTM D1238) in the range of 1.0 to 10.0 g/10 min;
- a melting point (determined by DSC according to ISO 11357) in the range of 120 to 170°C;
- a xylene cold soluble (XCS) content, determined according to ISO 16152 at a temperature of 25°C, in the range of 50.0 to 100.0 wt%, based on the elastomer;
- a 1-butene content, measured by $^{13}C\{^1H\}$ NMR as described in the experimental part in the range of 5.0 to 30.0 wt%, based on the total weight of the elastomer and an ethylene content, measured by $^{13}C\{^1H\}$ NMR as described in the experimental part in the range of 1.0 to 10.0 wt%, based on the total weight of the elastomer; and

wherein the weight proportions of components (a) and (b) add up to 100 wt%; and

wherein the sealing layer forms 5.0 to 30.0% of the total thickness of the multilayered film.

Advantageous embodiments of the multilayered film in accordance with the present invention are specified in the dependent claims 2 to 14. The present invention further relates in accordance with claim 15 to the use of the film according to the present invention as packaging material.

**Definitions**

A metallocene-catalysed (linear low density) polyethylene is defined in this invention as a (linear low density) polyethylene copolymer, which has been produced in the presence of a metallocene catalyst.

Ziegler-Natta catalysed linear low density polyethylene (znLLDPE) is defined in this invention as linear low density polyethylene copolymer, which has been produced in the presence of a Ziegler-Natta catalyst.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

For the purpose of the present invention the metallocene-catalysed (linear low density) polyethylene consisting of an in-situ blend of an ethylene-1-butene polymer component (A) and an ethylene-1-hexene polymer component (B) means that the polymer is produced in an at least 2-stage sequential polymerization process, wherein first component (A) is produced and component (B) is then produced in the presence of component (A) in a subsequent polymerization step, yielding the metallocene-catalysed (linear low density) polyethylene or vice versa, i.e. first component (B) is produced and component (A) is then produced in the presence of component (B) in a subsequent polymerization step, yielding the metallocene-catalysed (linear low density) polyethylene.

The same is true for the znLLDPE or HDPE used in the present invention.

The term "multimodal" in context of multimodal metallocene-catalysed (linear low density) polyethylene means herein multimodality with respect to melt flow rate (MFR) of at least the ethylene polymer components (A) and (B), i.e. the ethylene polymer components (A) and (B), have different MFR values. The multimodal metallocene-catalysed (linear low density) polyethylene can have further multimodality between the ethylene polymer components (A) and (B) with respect to one or more further properties, like density, comonomer type and/or comonomer content, as will be described later below.

The same is true for multimodal, e.g. bimodal or trimodal, znLLDPE or HDPE used in the present invention.

An ethylene homopolymer is a polymer that essentially consists of ethylene monomer units. Due to impurities especially during commercial polymerization processes, an ethylene homopolymer can comprise up to 1.0 mol% comonomer units, preferably up to 0.5 mol% comonomer units and most preferably up to 0.01 mol% comonomer units.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

For the purpose of the present invention the term "consists of an in-situ blend of (i) and (ii)" does not exclude the presence of any additive, which may be added to the MMCP. It only refers to the number of polymer components, i.e. polymer component (A) and polymer component (B).

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

*Metallocene-catalysed multimodal polyethylene copolymer (MMCP)*

The sealing layer of the multilayered film according to the present invention comprises a specific metallocene-catalysed multimodal polyethylene copolymer (MMCP). The other layers may also comprise said copolymer (MMCP).

The metallocene-catalysed multimodal polyethylene copolymer (MMCP) consists of an in-situ blend of (i) 30.0 to 70.0 wt% of an ethylene-1-butene polymer component (A), and (ii) 70.0 to 30.0 wt% of an ethylene-1-hexene polymer component (B).

The ethylene-1-butene polymer component (A) has a density (ISO 1183) in the range of 930 to 955 kg/m$^3$ and a MFR$_2$ (190°C, 2.16 kg, ISO 1133) in the range of 5.0 to 300 g/10 min.

The ethylene-1-hexene polymer component (B) has a density (ISO 1183) in the range of 880 to 915 kg/m$^3$ and a $MFR_2$ (190°C, 2.16 kg, ISO 1133) in the range of 0.001 to 0.1 g/10 min.

The metallocene-catalysed multimodal polyethylene copolymer (MMCP) has a density (ISO1183) in the range of 910 to 930 kg/m$^3$, a $MFR_2$ (190°C, 2.16 kg, ISO 1133) in the range of 0.1 to 3.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of 15 to 70.

In a preferred embodiment of the present invention, the ethylene-1-butene polymer component (A) consists of ethylene polymer fractions (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same, preferably the are different from each other.

Thus, the ethylene polymer fractions (A-1) and (A-2) have a $MFR_2$ (190°C, 2.16 kg, ISO 1133) in the range of 1.0 to 300 g/10 min, preferably of 5.0 to 200 g/10 min, more preferably of 10.0 to 150 g/10 min and even more preferably of 15.0 to 120 g/10 min, like 20.0 to 100 g/10 min.

The $MFR_2$ of the ethylene polymer components (A) and (B) are different from each other.

The ethylene polymer component (A) has a $MFR_2$ (190°C, 2.16 kg, ISO 1133) in the range of 5.0 to 300 g/10 min, preferably of 10.0 to 200 g/10 min, more preferably of 15.0 to 100 g/10 min, even more preferably of 20.0 to 80.0 g/10 min and still more preferably of 25.0 to 50.0 g/10 min.

The ethylene polymer component (B) has a $MFR_2$ (190°C, 2.16 kg, ISO 1133) in the range of 0.001 to 0.1 g/10 min, preferably of 0.005 to 0.09 g/10 min, more preferably of 0.008 to 0.08 g/10 min and even more preferably of 0.01 to 0.06 g/10 min.

In an embodiment of the invention it is preferred the ratio of the $MFR_2$ (190°C, 2.16 kg, ISO 1133) of the ethylene-1-butene polymer component (A) to the $MFR_2$ (190°C, 2.16 kg, ISO 1133) of the final multimodal metallocene catalysed linear low density polyethylene (MMCP) is at least 15.0 to 300, preferably 30.0 to 250, more preferably of 40.0 to 200 and even more preferably of 50.0 to 160.

The $MFR_2$ (190°C, 2.16 kg, ISO 1133) of the multimodal copolymer (MMCP) is in the range of 0.1 to 3.0 g/10 min, preferably 0.2 to 2.0 g/10 min, more preferably 0.3 to 1.5 g/10 min and even more preferably of 0.4 to 0.8 g/10 min.

The multimodal copolymer (MMCP) has a ratio of the $MFR_{21}$ (190°C, 21.6 kg, ISO 1133) to $MFR_2$ (190°C, 2.16 kg, ISO 1133), $MFR_{21}/MFR_2$, in the range of from 15 to 70, preferably from 25 to 65, more preferably from 30 to 60 and still more preferably from 32 to 55.

Naturally, in addition to multimodality with respect to, i.e. difference between, the $MFR_2$ of ethylene polymer components (A) and (B), the multimodal PE of the invention can also be multimodal e.g. with respect to one or both of the two further properties: multimodality with respect to, i.e. difference between, the comonomer content(s) present in the ethylene polymer components (A) and (B); and/or the density of the ethylene polymer components (A) and (B).

Preferably, the multimodal copolymer (MMCP) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in a so called multistage process, then the comonomer content of the first produced component, e.g. component (A), can be measured and the comonomer content of the other component, e.g. component (B), can be calculated according to following equation:

Comonomer content (mol% or wt%) in component B = (comonomer content (mol% or wt%) in final product - (weight fraction of component A * comonomer content (mol% or wt%) in component A)) / (weight fraction of component B).

Even more preferably the multimodal polymer (MMCP) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 930 to 955 kg/m$^3$, preferably of 932 to 952 kg/m$^3$, more preferably 935 to 950 kg/m$^3$ and/or the density of the ethylene polymer component (B) is in the range of 880 to 915 kg/m$^3$, preferably of 885 to 912 kg/m$^3$ and more preferably of 890 to 910 kg/m$^3$.

The polymer fractions (A-1) and (A-2) have a density in the range of from 925 to 960 kg/m$^3$, preferably of 925 to 958 kg/m$^3$, more preferably of 930 to 955 kg/m$^3$, and most preferred 935 to 952 kg/m$^3$.

The density of polymer fraction (A-1) and (A-2) may be the same or may be different from each other.

The metallocene catalysed multimodal copolymer (MMCP) is preferably a linear low density polyethylene (LLDPE) which has a well-known meaning.

The density of the multimodal copolymer (MMCP) is in the range of 910 to 930 kg/$m^3$, preferably of 912 to 925 kg/$m^3$ and more preferably of 915 to 920 kg/$m^3$.

More preferably the multimodal copolymer (MMCP) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal copolymer (MMCP), preferably in an amount of 32.0 to 55.0 wt% and even more preferably in an amount of 34.0 to 45.0 wt%.

Thus, the ethylene polymer component (B) is present in an amount of 70.0 to 30.0 wt% based on the multimodal copolymer (MMCP), preferably in an amount of 68.0 to 45.0 wt% and more preferably in an amount of 66.0 to 55.0 wt%.

The metallocene-catalysed multimodal copolymer (MMCP) can be produced in a 2-stage process, preferably comprising a slurry reactor (loop reactor), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the metallocene-catalysed multimodal copolymer (MMCP), preferably the ethylene polymer component (A) is produced in the loop reactor and the ethylene polymer component (B) is produced in GPR in the presence of the ethylene polymer component (A) to produce the metallocene-catalysed multimodal copolymer (MMCP).

In case that the ethylene component (A) of the metallocene-catalysed multimodal copolymer (MMCP) consists of ethylene polymer fractions (A-1) and (A-2), the metallocene-catalysed multimodal copolymer (MMCP) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273 A1, WO 2021/009189 A1, WO 2021/009190 A1, WO 2021/009191 A1 and WO 2021/009192 A1. Full details of how to prepare suitable metallocene-catalysed multimodal copolymer (MMCP) can be found in these references.

The metallocene-catalysed multimodal copolymer (MMCP) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene-catalysed multimodal copolymer (MMCP). This can counted as part of the first ethylene polymer component (A).

The metallocene-catalysed multimodal copolymer (MMCP) is produced by using a metallocene catalyst. The metallocene catalyst preferably comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the

catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

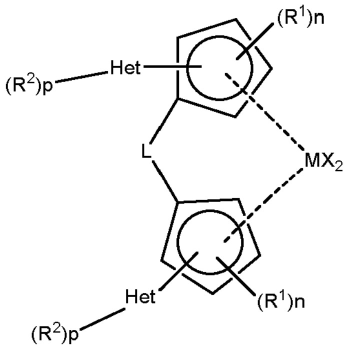

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group; each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure (I')

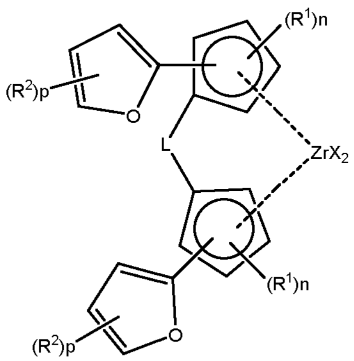

(I´)

wherein each X is independently a halogen atom, a $C_{1-6}$-alkyl group, $C_{1-6}$-alkoxy group, phenyl or benzyl group;
L is a $Me_2Si-$;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

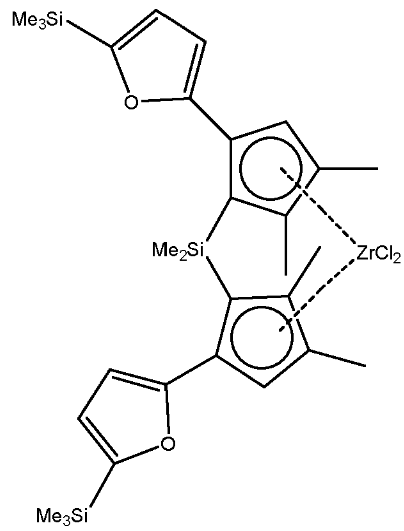
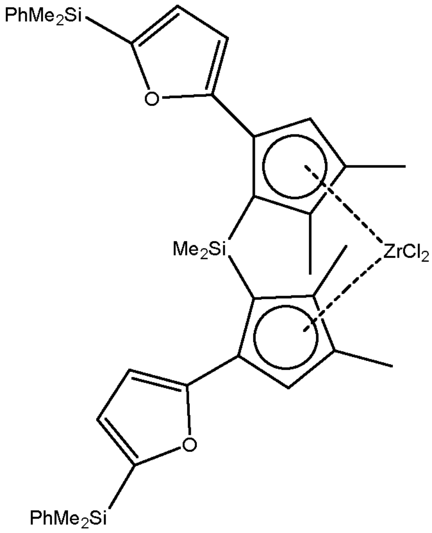

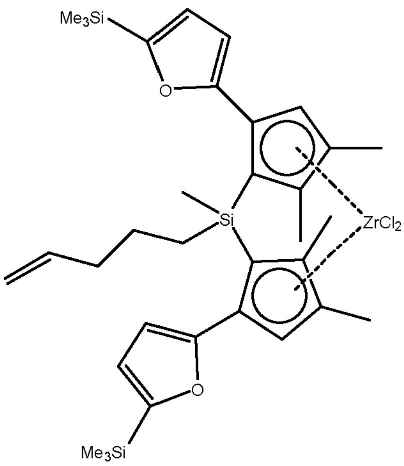
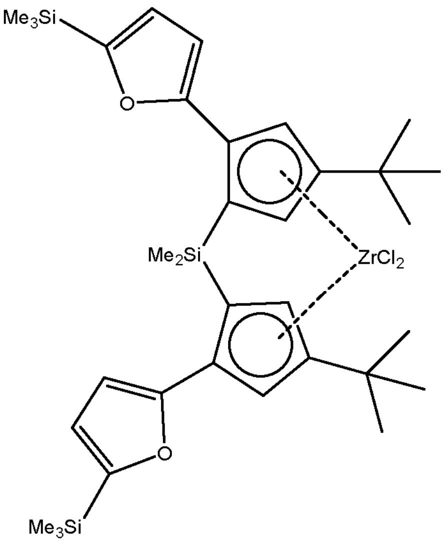

Most preferably the complex dimethylsilanediylbis-[2-(5-trimethylsilylfuran-2-yl)-4,5-dimethylcyclopentadien-1-yl] zirconium dichloride is used.

More preferably the ethylene polymer components (A) and (B) of the multimodal copolymer (MMCP) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) and/or boron based cocatalysts (such as borates) is preferred.

The multimodal copolymer (MMCP) may contain additives and/or fillers. The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer, whereby the carrier polymer is calculated to the amount of the respective additive(s), based on the total amount of the multimodal copolymer (MMCP) (100 wt%).

*Elastomer*

The sealing layer of the multilayered film according to the present invention comprises in addition to the MMCP a specific elastomer.

The sealing layer comprises 5 to 30 wt% based on the total weight of the sealing layer (SL) of an elastomer being a terpolymer of propylene, ethylene and 1-butene; having

- a density (ASTM D1505) in the range of 860 to 875 kg/m$^3$;
- a $MFR_2$ (230°C, 2.16 kg, ASTM D1238) in the range of 1.0 to 10.0 g/10 min;
- a melting point (measured by DSC according to ISO11357) in the range of 120 to 170°C;
- a xylene cold soluble (XCS) content, determined according to ISO 16152 at a temperature of 25°C, in the range of 50.0 to 100 wt%, based on the elastomer; and
- a 1-butene content, measured by $^{13}C\{^1H\}$ NMR as described in the experimental part.in the range of 5.0 to 30.0 wt%, based on the total weight of the elastomer, and an ethylene content, measured by $^{13}C\{^1H\}$ NMR as described in the experimental part in the range of 1.0 to 10.0 wt%, based on the total weight of the elastomer.

Preferred ranges for the above cited properties are:

- a density (ASTM D1505) in the range of 862 to 872 kg/m$^3$, more preferably 865 to 870 kg/m$^3$,
- a $MFR_2$ (230°C, 2.16 kg, ASTM D1238) in the range of 2.0 to 8.0 g/10 min, more preferably 3.0 to 7.0 g/10 min;
- a melting point (measured by DSC according to ISO11357) in the range of 130 to 165°C, more preferably 140 to 162°C;
- a xylene cold soluble (XCS) content, determined according to ISO 16152 at a temperature of 25°C, in the range of 70.0 to 100.0 wt%, more preferably 85.0 to 100.0 wt% based on the elastomer; and
- a 1-butene content, measured by $^{13}C\{^1H\}$ NMR as described in the experimental part, in the range of 6.0 to 25.0 wt%, more preferably 7.0 to 20.0 wt%, based on the total weight of the elastomer and an ethylene content, measured by $^{13}C\{^1H\}$ NMR as described in the experimental part in the range of 2.0 to 8.0 wt%, more preferably 3.5 to 7.0 wt%, based on the total weight of the elastomer.

According to a preferred embodiment in accordance with the present invention the elastomer has in addition a glass transition temperature determined by dynamic mechanical analysis according to ISO 6721- below -5 °C, more preferably in the range of -30 to below -5 °C, still preferably in the range of -27 to -10 °C, like in the range of -25 to -12 °C.
The elastomers in accordance with the present invention are commercially available, e.g. from Mitsui under the tradename Tafmer™ PN, former Notio™ (such as e.g. Tafmer™ PN-2060, Tafmer™ PN-0040).
Components (a) and (b) sum up to 100 wt% in the sealing layer (SL) of the present invention.

*Sealing layer (SL)*

The sealing layer (SL) forms 5.0 to 30.0 % of the total thickness of the multilayered film.
Thus, the elastomer (b) is present of no more than 10.0 wt% in total, based on the multilayered film, which simplifies recycling of the multilayered film.
According to a preferred embodiment in accordance with the present invention the content of MMCP (a) in the sealing layer (SL) based on the total weight of said layer is in the range of 75.0 to 90.0 wt%, more preferably in the range of 78.0 to 85.0 wt% and the content of elastomer (b) in the sealing layer (SL) based on the total weight of said layer is in the range of 10.0 to 25.0 wt%, more preferably in the range of 15.0 to 22.0 wt%.

*Multilayered film*

A preferred embodiment of the multilayered film in accordance with the present invention stipulates that the skin layer (SKL) of the multilayered film has a thickness in the range of 1 to 100 μm, preferably in the range of 5 to 80 μm and more preferably in the range of 10 to 15 μm.
According to another preferred embodiment in accordance with the present invention the core layer (CL) of the multilayered film has a thickness in the range of 10 to 200 μm, preferably in the range of 20 to 80 μm and more preferably in the range of 30 to 45 μm.
In still another preferred embodiment according to the present invention the sealing layer (SL) of the multilayered film has a thickness in the range of 1 to 50 μm, preferably in the range of 5 to 25 μm and more preferably in the range of 10 to 15 μm.
In a further preferred embodiment according to the present invention the multilayered film has a total thickness in the range of 12 to 350 μm, preferably in the range of 40 to 150 μm and more preferably in the range of 50 to 70 μm.
For the three-layer structure, the sealing layer (SL), the skin layer (SKL) and the core layer (CL) may all be of equal thickness or alternatively the core layer (CL) may be thicker than the skin layer (SKL) and the sealing layer (SL).
A convenient film comprises a skin (SKL) and a sealing layer (SL), each forming 5.0 to 30.0%, preferably 8.0 to 28.0%, more preferably 10.0 to 25.0% of the total final thickness of the 3-layered film, the core layer (CL) forming the remaining thickness, e.g. 40.0 to 90.0%, preferably 46.0 to 84.0%, more preferably 50.0 to 80.0% of the total final thickness of the 3-layered film.
The total thickness of the film is 100%, thus the sum of the individual layers has to be 100%.

According to another preferred embodiment in accordance with the present invention the multilayered film consists of the skin layer (SKL), the core layer (CL) and the sealing layer (SL).
It is self-explanatory that the core layer (CL) is placed between the skin layer (SKL) and the sealing layer (SL).

*Ad skin layer (SKL)*

The skin layer (SKL) preferably comprises 90 to 100 wt%, more preferably 92 to 100 wt%, still more preferably 95 to 100 wt% based on the total weight of the skin layer (SKL) and most preferably consists of a high density polyethylene (HDPE) and optionally 0 to 10 wt%, preferably 0 to 8 wt%, more preferably 0 to 5 wt% based on the total weight of the skin layer (SKL) of a LDPE having a density (ISO 1183) in the range of 910 to 930 kg/$m^3$, preferably of 920 to 925 kg/$m^3$ and a $MFR_2$ (190°C, 2.16 kg, ISO 1133) in the range of 0.5 to 4.0 g/10 min and preferably of 0.5 to 1.0 g/10 min.
The high density polyethylene (HDPE) is characterized by having

- a density in the range of 945 to 970 kg/m3 (ISO 1183), preferably 948 to 968 kg/$m^3$,
- a $MFR_2$ (190°C, 2.16 kg, ISO 1133) in the range of 0.1 to 3.0 g/10 min,
- a $MFR_5$ (190°C, 5 kg, ISO 1133) in the range of 1.0 to 10.0 g/10 min,
- a $MFR_{21}$ (190°C, 21.6 kg, ISO 1133) of the HDPE in the range of 20.0 to 100.0 g/10 min and
- a (melt) flow rate ratio $FRR_{21}/_5$ ($MFR_{21}/MFR_5$) of from 5 to 30.

The high density polyethylene (HDPE) preferably has a density (ISO 1183) in the range of 948 to 968 kg/$m^3$ and more preferably of 950 to 965 kg/$m^3$, like 951 to 962 kg/$m^3$.
The $MFR_2$ (190°C, 2.16 kg, ISO 1133) of the HDPE is preferably in the range of 0.2 to 2.5 g/10 min, more preferably 0.5 to 2.0 g/10 min.
The $MFR_5$ (190°C, 5 kg, ISO 1133) of the HDPE is preferably in the range of 1.5 to 8.0 g/10 min, more preferably 2.0 to 6.0 g/10 min.
The $MFR_{21}$ (190°C, 21.6 kg, ISO 1133) of the HDPE is preferably in the range of 25.0 to 80.0 g/10 min, more preferably 30.0 to 60.0 g/10 min.
The HDPE furthermore preferably has a (melt) flow rate ratio $FRR_{21}/_5$ ($MFR_{21}/MFR_5$) of from 7 to 25 and most preferably from 8 to 20.
The HDPE can be unimodal, bimodal or trimodal.
In one embodiment, the high density polyethylene (HDPE) consists of 2 polyethylene components (C) and (D), thus being a bimodal HDPE, whereby the bimodal HDPE is produced in a 2 stage-polymerization process.
In another embodiment, the polyethylene component (C) consists of ethylene polymer fractions (C-1) and (C-2), thus, the multimodal HDPE is a trimodal HDPE, whereby the trimodal HDPE is produced in a 3-stage polymerization step.

*Embodiment (I)*

In a preferred embodiment, i.e. embodiment (I), the multimodal HDPE is a trimodal HDPE, which is produced in the presence of a metallocene catalyst system or a Ziegler-Natta catalyst system, preferably in the presence of a metallocene catalyst system as described above.
In embodiment (I), the polyethylene component (C) of the trimodal HDPE is an ethylene copolymer and component (D) is an ethylene homopolymer or copolymer.
Preferably, component (D) consists of a single ethylene homopolymer or copolymer. Component (C) is an ethylene copolymer mixture comprising (e.g. consisting of) a first ethylene copolymer fraction (C-1) and a second ethylene copolymer fraction (C-2), whereby the comonomer(s) in the first and second ethylene copolymer fractions are the same.
In this embodiment (I) of the present invention, the polyethylene component (C) preferably has a $MFR_2$ in the range of 10.0 to 400 g/10min, more preferably 12.0 to 200 g/10min, even more preferably 15.0 to 100 g/10min and most preferably 20.0 to 50.0 g/10 min.
The density of the polyethylene component (C) preferably is in the range of 955 to 970 kg/$m^3$, more preferably 958 to 968 kg/$m^3$ and even more preferably 960 to 965 kg/$m^3$.
As stated above, in embodiment (I) the polyethylene component (C) is an ethylene copolymer. Preferred ethylene copolymers employ alpha-olefins (e.g. C3-12 alpha-olefins) as comonomers. Examples of suitable alpha-olefins include 1-butene, 1-hexene and 1-octene; 1-butene is an especially preferred comonomer.
Polyethylene component (C) consists of two fractions, i.e. a first ethylene copolymer fraction (C-1) and a second ethylene copolymer fraction (C-2).
It is possible that fraction (C-1) is produced first and then fraction (C-2) is produced in the presence of fraction (C-1) in a subsequent reactor or vice versa, i.e. fraction (C-2) is produced first and then fraction (C-1) is produced in the presence of fraction (C-2) in a subsequent reactor. Preferably, fraction (C-1) is produced first.

The $MFR_2$ and/or the density of fractions (C-1) and (C-2) may be the same or may be different from each other.
Thus, the ethylene polymer fraction (C-1) and/or ethylene polymer fraction (C-2) preferably has a $MFR_2$ (190°C, 2.16 kg, ISO 1133) in the range of 10.0 to 80.0 g/10 min, preferably of 15.0 to 70.0 g/10 min, more preferably of 20.0 to 60.0 g/10 min and even more preferably of 30.0 to 50.0 g/10 min.
Preferably, the $MFR_2$ of fraction (C-1) is higher than the $MFR_2$ of fraction (C-2).
The density of the ethylene polymer fraction (C-1) and/or (C-2) preferably is in the range of 945 to 975 kg/$m^3$, more preferably 950 to 970 kg/$m^3$ and even more preferably 952 to 968 kg/$m^3$.
Preferably, the density of fraction (C-2) is higher than the density of fraction (C-1).
The polyethylene component (D) preferably has a $MFR_2$ in the range of 0.01 to 1.0 g/10min, more preferably 0.02 to 0.8 g/10min, and even more preferably 0.05 to 0.5 g/10min.
The density of the polyethylene component (D) preferably is in the range of 925 to 965 kg/$m^3$, more preferably 930 to 962 kg/$m^3$ and even more preferably 935 to 960 kg/$m^3$.
As stated above polyethylene component (D) is an ethylene homopolymer or a copolymer.
In case that polyethylene component (D) is an ethylene copolymer, preferred ethylene copolymers employ alpha-olefins (e.g. C3-12 alpha-olefins) as comonomers. Examples of suitable alpha-olefins include 1-butene, 1-hexene and 1-octene; 1-hexene is an especially preferred comonomer.
The multimodal HDPE of embodiment (I) is produced by polymerization using conditions which create a multimodal (i.e. trimodal) polymer product.
Regarding the polymerization process in a three-stage polymerization process, it is referred to the description related to MMCP.

*Embodiment (II)*

In embodiment (II), the multimodal HDPE is a bimodal HDPE, which is produced in the presence of a metallocene catalyst system or a Ziegler-Natta catalyst system (znHDPE), preferably in the presence of a Ziegler-Natta catalyst system.
The HDPE of embodiment (II) is an ethylene homopolymer or an ethylene copolymer. An ethylene copolymer is a polymer which comprises ethylene monomer and one or more comonomer(s).
The comonomer can be an alpha-olefin having 4 to 12 carbon atoms, e.g. 1-butene, 4-methyl-1-pentene, 1-hexene, 1-octene, 1-decene.
More preferably, the HDPE of embodiment (II) is a copolymer of ethylene and 1-butene, 1-hexene or 1-octene, most preferably 1-butene.
Preferably, the total amount of comonomer(s) present in the HDPE is of 0.0 to 0.40 mol%, more preferably of 0.01 to 0.30 mol% and most preferably 0.02 to 0.20 mol%.
The HDPE comprises, or consists of, a lower molecular weight (LMW) component (C) and a higher molecular weight (HMW) component (D); wherein the LMW component (C) is an ethylene homopolymer having a density of from 965 to 975 kg/$m^3$ and the HMW component (D) is an ethylene copolymer of ethylene with at least one C4 to C12 alpha-olefin, having a density of from 935 to 955 kg/$m^3$.
The lower molecular weight (LMW) component (C) has a lower molecular weight than the higher molecular weight component (D) and thus higher $MFR_2$ than the higher molecular weight (HMW) component (D).
The HDPE used according to the present invention is preferably produced in the presence of a Ziegler-Natta catalyst system and is thus a znHDPE.
As the bimodal znHDPE, resin Borstar® FB5600 as produced by Borouge may be used.

*Core layer (CL)*

The core layer (CL) preferably comprises 10 to 35 wt%, more preferably 15 to 30 wt% and still more preferably 18 to 25 wt% based on the total weight of the core layer (CL) of a metallocene-catalysed multimodal polyethylene copolymer (MMCP) as described for the sealing layer (SL); and 65 to 90 wt%, more preferably 70 to 85 wt% and still more preferably 75 to 82 wt% based on the total weight of the core layer (CL) of a Ziegler-Natta catalysed linear low density polyethylene being preferably a multimodal alpha-olefin terpolymer, preferably having a density (ISO 1183) in the range of 920 to 950 kg/$m^3$ and a $MFR_5$ (190°C, 2.16 kg, ISO 1133) in the range of 0.1 to 4.0 g/10 min.
As metallocene-catalysed multimodal polyethylene copolymer (MMCP) the same or a different MMCP as described for the sealing layer (SL) can be used.
The Ziegler-Natta catalysed linear low density polyethylene (znLLDPE) has a density (ISO 1183) in the range of 920 to 950 kg/$m^3$, preferably of 925 to 945 kg/$m^3$, more preferably of 928 to 942 kg/$m^3$, like 930 to 940 kg/$m^3$.
The $MFR_5$ (190°C, 5 kg, ISO 1133) of the znLLDPE is in the range of 0.1 to 4.0 g/10 min, preferably of 0.5 to 3.5 g/10 min, more preferably of 0.7 to 3.0 g/10 min, like 0.8 to 2.5 g/10 min.

The znLLDPE contains at least one or two comonomer(s). Suitable comonomers are C3-C10 alpha-olefin comonomers.

Thus, the znLLDPE can be a copolymer of ethylene and one C3-C10 alpha-olefin comonomer or a terpolymer of ethylene and two different C3-C10 alpha-olefin comonomers.

Preferably, the comonomers are selected from the group of 1-butene, 1-hexene and 1-octene. It is preferred if the comonomer employed is 1-butene and/or 1-hexene.

More preferred are terpolymers comprising 1-butene and 1-hexene comonomers.

The total comonomer content of the znLLDPE is preferably in the range of 0.3 to 7.0 mol%, more preferably of 0.6 to 4.5 mol% and even more preferably of 1.5 to 3.5 mol%. 1-butene is preferably present in an amount of 0.1 to 3.0 mol%, more preferably of 0.2 to 2.0 mol%, and even more preferably of 0.3 to 1.5 mol% and 1-hexene is present in an amount of 0.2 to 4.0 mol%, more preferably of 0.4 to 2.5 mol% and even more preferably of 0.7 to 2.0 mol%.

In one embodiment of the multilayered film according to the invention, the znLLDPE for the core layer (CL), comprises

(X-1) a lower molecular weight (LMW) homopolymer of ethylene and
(X-2) a higher molecular weight (HMW) terpolymer of ethylene, 1-butene and 1-hexene.

The LMW homopolymer fraction (X-1) has a lower molecular weight than the HMW terpolymer fraction (X-2).

In a further embodiment of the present invention the lower molecular weight (LMW) homopolymer of ethylene (X-1) consists of one or two fractions, i.e. of one or two homopolymers of ethylene.

In case that the lower molecular weight (LMW) homopolymer of ethylene (X-1) consists of two homopolymers of ethylene, these two fractions are named (LMW-1) and (LMW-2).

The lower molecular weight homopolymer (X-1) of the znLLDPE has a melt index $MFR_2$ according to ISO 1133 (190°C) in the range of from 200 to 1000 g/10min, preferably of from 250 to 800 g/10min; a density according to ISO 1183 in the range of from 940 to 980 kg/m$^3$, preferably 945 to 975 kg/m$^3$ and a comonomer content in the range of from 0 to 2.5 mol%, preferably from 0 to 2.0 mol%.

The amount of the lower molecular weight fraction (X-1) of the znLLDPE is in the range of 30 to 60 wt%, preferably 35 to 50 wt% and more preferably 35 to 45 wt%.

The expression "homopolymer of ethylene" used herein refers to a polyethylene that consists substantially, i.e. to at least 98.0 wt%, preferably at least 99.0 wt% and more preferably at least 99.5 wt% by weight, like at least 99.8 wt% of ethylene.

In case that the lower molecular weight (LMW) homopolymer of ethylene (X1) consists of two homopolymers of ethylene, i.e. fractions (LMW-1) and (LMW-2), these two fractions preferably have a different MFR2 according to ISO 1133 (190°C).

The homopolymer fraction (LMW-1) preferably has a MFR2 according to ISO 1133 (190°C) in the range of 100 to 400 g/10 min, more preferably in the range of 150 to 300 g/10 min, whereas the homopolymer fraction (LMW-2) preferably has a MFR2 according to ISO 1133 (190°C) in the range of 450 to 1200 g/10 min, more preferably in the range of 600 to 1100 g/10 min.

The MFR2 of fraction (LMW-1) is preferably lower than the MFR2 of the total lower molecular weight (LMW) homopolymer of ethylene (X-1).

According to a preferred embodiment the ratio of $MFR_2$(LMW-1)/$MFR_2$(X-1) may be for example between greater than 1 and up to 10, preferably between 1.5 and 5, such as 1.5 to 4. Ideally, the MFR difference between the first and second homopolymer fraction (LMW-1) and (LMW-2) is as high as possible.

Ideally, the MFR difference between the first homopolymer fraction (LMW-1) and the $MFR_2$ of the total lower molecular weight (LMW) homopolymer of ethylene (X-1) is as high as possible e.g. $MFR_2$ of first homopolymer fraction (LMW-1) may be at least 50 g/10min, such as at least 100 g/10min or such as 100 to 200 g/10min lower than the $MFR_2$ of the total lower molecular weight (LMW) homopolymer of ethylene (X-1).

The density of the two homopolymer fractions (LMW-1) and (LMW-2) may be the same or may be different and is in the range of 955 to 980 kg/m$^3$, preferably 965 to 980 kg/m$^3$ or 965 to 975 kg/m$^3$.

In an embodiment of the present invention the density of homopolymer fractions (LMW-1) and (LMW-2) are the same or differ +/- 5 kg/m$^3$, preferably +/- 2 kg/m$^3$.

The total lower molecular weight (LMW) homopolymer of ethylene (X-1) may comprise 30 to 60 wt% of the first ethylene homopolymer fraction (LMW-1) and 70 to 40 wt% of the second ethylene homopolymer fraction (LMW-2). In some embodiments, there is an excess of the second ethylene homopolymer fraction (LMW-2), e.g. 54 to 70 wt% of the second ethylene homopolymer fraction (LMW-2).

In another embodiment the total lower molecular weight (LMW) homopolymer of ethylene (X-1) contains the same amount of first and second ethylene homopolymer fractions (LMW-1) and (LMW-2).

The higher molecular weight fraction (X-2) has a lower $MFR_2$ and a lower density than the lower molecular weight

fraction (X-1).

Preferably, the znLLDPE is produced in a multi-stage, e.g. two-stage or three-stage polymerization using the same Ziegler-Natta catalyst in all stages. Preferably, the znLLDPE is made using a slurry polymerization in at least one loop reactor followed by a gas phase polymerization in a gas phase reactor.

A loop reactor - gas phase reactor system or loop - loop - gas phase reactor system is well known as Borealis technology, i.e. a BORSTAR® reactor system.

In one embodiment, the znLLDPE is thus preferably formed in a two-stage process comprising a first slurry loop polymerization followed by gas phase polymerization in the presence of a Ziegler-Natta catalyst.

Preferably, the lower molecular weight fraction (X-1) is produced in a continuously operating loop reactor where ethylene is polymerized in the presence of a Ziegler-Natta catalyst and the higher molecular weight fraction (X-2) is then formed in a gas phase reactor using the same Ziegler-Natta catalyst.

Such znLLDPEs are known in the state of the art and are described e.g. in WO 03/066698 or WO 2008/034630 or are commercially available, such as BorShape™ FX1001 and BorShape™ FX1002 (both from Borealis AG).

*Properties of the multilayered film*

The multilayered film according to the present invention has an attractive balance of mechanical, e.g. tensile modulus (TM), and sealing properties, e.g. SIT and/or hot tack force (HTF).

Thus, the films of the invention have a sealing initiation temperature (SIT) determined as described in the experimental part on a 3-layered blown film with a thickness of 60 μm of below 75°C, preferably in the range of 45 to 70°C, more preferably in the range of 46°C to 60°C, and even more preferably in the range of 48°C to 58°C.

The films of the invention are further characterized by a hot tack force (maximum Hot tack force) of at least 6.2 N, when measured according to ASTM F 1921 - 98 (2004), method B on a three-layered blown film sample (60 μm thickness).

Preferably, the hot tack force (HTF) is in the range of 6.2 N up to 15.0 N, more preferably in the range of 7.2 to 12.0 N and even more preferably in the range of 7.5 to 11.0 N.

Another preferred embodiment in accordance with the present invention stipulates that the multilayered film has a Tensile Modulus in MD (ISO 527-3) in the range of 200 to 600 MPa, preferably in the range of 300 to 550 MPa and more preferably in the range of 350 to 500 MPa; and/or a Tensile Modulus in TD (ISO 527-3) in the range of 250 to 650 MPa, preferably in the range of 300 to 600 MPa and more preferably in the range of 400 to 550; and/or a Dart Drop Strength (ISO 7765-1) in the range of 200 to 1000 g, preferably in the range of 300 to 800 g, and more preferably in the range of 400 to 600 g.

Both properties measured on a three-layered blown film sample (60 μm thickness).

In another embodiment, the films show improved sealing performance (lower SIT) (without deteriorating the mechanical performance (stiffness and dart-drop impact strength (DDI)), which is expressed by the relation between mechanical properties and sealing properties according to formula (II):

$$\frac{Tensile\ Modulus\ (MD)[MPa]*DDI(g)}{SIT\ [°C]} > 2800 \quad \text{(II)}$$

determined on 60 μm test blown film, wherein the Tensile Modulus (TM) in machine direction is measured according to ISO 527-3 at 23°C on 60 μm test blown films, DDI is the dart-drop impact strength determined according to ISO 7765-1 on a 60 μm test blown film and SIT is the sealing initiation temperature measured as described in the experimental part on a 60 μm test blown film.

Preferably TM(MD)*DDI/SIT for this embodiment is > 3000, and more preferably > 3500.

A suitable upper limit for TM(MD)*DDI/SIT for this embodiment is 6000, preferably 5500, and more preferably 5000.

Additionally the optical properties are not destroyed and kept on an acceptable level.

Thus, multilayered films according to the present invention may have a haze measured according to ASTM D1003 on a 60 μm 3-layered test blown film of below 50%, preferably in the range of 10 to 48%, more preferably 15 to 45% and even more preferably 20 to below 42%.

*Method*

Another aspect of the present invention relates to a method for producing the multilayered article.

The multilayered film according to the present invention is generally prepared by a conventional process, wherein the layers of the film are co-extruded.

The different polymer components in any of the layers of the film are typically intimately mixed prior to layer

formation, for example using a twin screw extruder, preferably a counter-rotating extruder or a co-rotating extruder. Then, the blends are converted into a coextruded film.

Generally, the multilayered film according to the present invention can be produced by a blown film or cast film process, preferably by a blown film process.

In order to manufacture such films, for example at least three polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150 to 230°C, more preferably 160 to 225°C and cooled by blowing gas (generally air) at a temperature of 10 to 40°C, more preferably 12 to 16°C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

Use

A further aspect of the present invention refers to the use of the multilayered film as packaging material, preferably for food and/or medical products.

The invention will now be described with reference to the following non-limiting examples.

## Experimental Part

### A. Measuring methods

The following definitions of terms and determination methods apply for the above general description of the invention as well as to the below examples unless otherwise defined.

#### Melt Flow Rate of MMCP

The melt flow rate (MFR) of the MMCP was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The MFR of polyethylene is determined at a temperature of 190°C and may be determined at different loadings such as 2.16 kg ($MFR_2$), 5 kg ($MFR_5$) or 21.6 kg ($MFR_{21}$).

Calculation of $MFR_2$ of Component B and of Fraction (A-2)

$$logA = x \cdot logB + (1-x) \cdot logC$$

$$C = 10^{\wedge}\frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (MMCP)
X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (=Component (A))
X = weight fraction of the 1st fraction (A-1).

**Density of MMCP**

The density was measured according to ISO 1183 and ISO1872-2 for sample preparation.

**DSC analysis, melting ($T_m$) and crystallization temperature ($T_c$)**

Data may be measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) were determined from the cooling step, while melting temperature ($T_m$) and melting enthalpy ($H_m$) are determined from the second heating step.

The **glass transition temperature Tg** was determined by dynamic mechanical analysis according to ISO 6721-7. The measurements were done in torsion mode on compression moulded samples (40x10x1 mm3) between -100 °C and +150 °C with a heating rate of 2 °C/min and a frequency of 1 Hz.

**Sealing initiation temperature (SIT); sealing end temperature (SET), sealing range:**
The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film. The sealing range was determined on a J&B Universal Sealing Machine Type 4000 with a 3 layer test blown film of 60 μm thickness with the following further parameters:

Conditioning time: > 96 h
Specimen width: 25 mm
Sealing pressure: 0.4 $N/mm^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Hot Tack temperature** (lowest temperature to get maximum Hot tack force) and Hot tack (maximum Hot tack force) were measured according to ASTM F 1921 method B on a three-layer blown film of 60μm thickness with below settings:
Q-name instrument: Hot Tack - Sealing Tester
Model: J&B model 4000 MB

| | |
|---|---|
| Sealbar length: | 50 [mm] |
| Seal bar width: | 5 [mm] |
| Seal bar shape: | flat |

Seal Pressure: 0.15 $N/mm^2$
Seal Time: 1s
Coating of sealing bars:NIPTEF ®
Roughness of coating sealing bars: 1 [μm]
Film Specimen width: 25 mm
Cool time: 0.2 s
Peel Speed: 200 mm/s
Start temperature: 50 °C
End temperature: burn through and/or shrinking

Increments: 5 °C

All film test specimens were prepared in standard atmospheres for conditioning and testing at 23 °C (± 2 °C) and 50 % (± 10 %) relative humidity. The minimum conditioning time of test specimen in standard atmosphere just before start testing is at least 40 h. The minimum storage time between extrusion of film sample and start testing is at least 88 h. The hot-tack measurement determines the strength of heat seals formed in the films, immediately after the seal has been made and before it cools to ambient temperature.

The hot-tack force was measured as a function of temperature within the temperature range and with temperature increments as indicated above. The number of test specimens were at least 3 specimens per temperature. The Hot-tack force is evaluated as the highest force (maximum peak value) with failure mode "peel".

**Dart drop strength (DDI): Impact resistance by free-falling dart method**

The DDI was measured according to ISO 7765-1:1988 / Method A from the films (non-oriented films and laminates) as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

*Standard conditions:*

Conditioning time: > 96 h
Test temperature: 23 °C
Dart head material: phenolic
Dart diameter: 38 mm
Drop height: 660 mm

*Results:*

Impact failure weight - 50% [g]

Haze

Haze was determined according to ASTM D 1003-00 on 3 layered films with 60 µm thickness as produced indicated below.

**Tensile modulus (TM)**

Tensile modulus (MPa) was measured in machine (MD) and transverse direction (TD) according to ISO 527-3 on film samples prepared as described below with a film thickness of 60 µm and at a cross head speed of 1 mm/min.

**Comonomer contents - Quantification of microstructure by NMR spectroscopy for Notio**

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Advance III 500 NMR spectrometer operating at 500.13 and 125.76 MHz for 1H and 13C respectively. All spectra were recorded using a $^{13}C$ optimised 7 mm magic-angle spinning (MAS) probe head at 180°C using nitrogen gas for all pneumatics. Approximately 200 mg of material was packed into a 7 mm outer diameter zirconia MAS rotor and spun at 4.5 kHz. This setup was chosen primarily for the high sensitivity needed for rapid identification and accurate quantification {1, 2, 6} Standard single-pulse excitation was employed utilising the NOE at short recycle delays {3, 1} and the RS-HEPT decoupling scheme {4, 5}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the methyl isotactic pentad (mmmm) at 21.85 ppm.

Characteristic signals corresponding to regio defects were not observed {11}. The amount of propene was quantified based on the main $S\alpha\alpha$ methylene sites at 44.1 ppm:

$$Ptotal = IS\alpha\alpha$$

Characteristic signals corresponding to the incorporation of 1-butene were observed and the comonomer content quantified in the following way. The amount isolated 1-butene incorporated in PPBPP sequences was quantified using the integral of the αB2 sites at 44.1 ppm accounting for the number of reporting sites per comonomer:

$$B = I\alpha B2 / 2$$

The amount consecutively incorporated 1-butene in PPBBPP sequences was quantified using the integral of the ααB2 site at 40.5 ppm accounting for the number of reporting sites per comonomer:

$$BB = 2 * I\alpha\alpha B2$$

The total 1-butene content was calculated based on the sum of isolated and consecutively incorporated 1-butene:

$$Btotal = B + BB$$

The total mole fraction of 1-butene in the polymer was then calculated as: fB = (Btotal / (Etotal + Ptotal + Btotal))

Characteristic signals corresponding to the incorporation of ethylene were observed and the comonomer content quantified in the following way. The amount isolated ethylene incorporated in PPEPP sequences was quantified using the integral of the Sαγ sites at 37.9 ppm accounting for the number of reporting sites per comonomer:

$$E = IS\alpha\gamma / 2$$

With no sites indicative of consecutive incorporation observed the total ethylene comonomer content was calculated solely on this quantity:

$$Etotal = E$$

The total mole fraction of ethylene in the polymer was then calculated as:

$$fE = (Etotal / (Etotal + Ptotal + Btotal))$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt\%] = 100 * (fB * 56.11) / ((fE * 28.05) + (fB * 56.11) + ((1-(fE+fB)) * 42.08))$$

$$E\ [wt\%] = 100 * ( fE * 28.05 ) / ((fE * 28.05) + (fB * 56.11) + ((1-(fE+fB)) * 42.08))$$

Bibliographic references:

1) Klimke, K., Parkinson, M., Piel, C., Kaminsky, W., Spiess, H.W., Wilhelm, M., Macromol. Chem. Phys. 2006; 207:382.
2) Parkinson, M., Klimke, K., Spiess, H.W., Wilhelm, M., Macromol. Chem. Phys. 2007; 2 08:2128.
3) Pollard, M., Klimke, K., Graf, R., Spiess, H.W., Wilhelm, M., Sperber, O., Piel, C., Kaminsky, W., Macromolecules 2004; 37:813.

4) Filip, X., Tripon, C., Filip, C., J. Mag. Resn. 2005, 176, 239.
5) Griffin, J.M., Tripon, C., Samoson, A., Filip, C., and Brown, S.P., Mag. Res. in Chem. 2007 45, S1, S198.
6) Castignolles, P., Graf, R., Parkinson, M., Wilhelm, M., Gaborieau, M., Polymer 50 (2009) 2373.
7) Busico, V., Cipullo, R., Prog. Polym. Sci. 26 (2001) 443.
8) Busico, V., Cipullo, R., Monaco, G., Vacatello, M., Segre, A.L., Macromolecules 30 (1997) 6251.
9) Zhou, Z., Kuemmerle, R., Qiu, X., Redwine, D., Cong, R., Taha, A., Baugh, D. Winniford, B., J. Mag. Reson. 187 (2007) 225.
10) Busico, V., Carbonniere, P., Cipullo, R., Pellecchia, R., Severn, J., Talarico, G., Macromol. Rapid Commun. 2007, 28, 1128.
11) Resconi, L., Cavallo, L., Fait, A., Piemontesi, F., Chem. Rev. 2000, 100, 1253.

**Xylene cold solubles (XCS) content for Notio** was measured at 25°C according to ISO 16152, first edition; 2005-07-01

**B. Materials used**

**TAFMER™ PN-0040** is a propylene/ethylene/1-butene terpolymer elastomer, commercially available from Mitsui. Density (ASTM D1505) of 868 kg/m$^3$, $MFR_2$ (230°C, 2.16 kg; (ASTM D1238), of 4 g/10 min, melting point Tm (DSC ISO 11357) 160°C, Tg -16°C, XCS 94.3 wt%, C2 content 4.7 wt%, C4 content 8.9 wt%.

FX1001 is a multimodal alpha-olefin terpolymer ($MFR_5$ (190°C/5 kg), ISO 1133): 0.9 g/10min, density (ISO 1183): 931 kg/m$^3$, $T_m$ 127°C, produced with a Ziegler-Natta catalyst) commercially available as BorShape™ FX1001 from Borealis AG and contains antioxidant.

**Queo™ 7001LA** is an unimodal ethylene based 1-octene plastomer $MFR_2$ (190°C/2.16kg; ISO 1133): 1.0 g/10 min, density (ISO 1183): 870 kg/m$^3$, $T_m$ 56°C, produced in a solution polymerization process using a metallocene catalyst, commercially available from Borealis AG and contains processing stabilizers.

HDPE Borstar® FB5600 commercially available from Borouge, is a bimodal ethylene copolymer, density (ISO 1183) 960 kg/m$^3$, Tm 132°C, $MFR_2$ (190°C, 2.16 kg, ISO 1133) 0.7 g/10 min, $MFR_5$ (190°C, 5.0 kg, ISO 1133) 2.5 g/10 min, $MFR_{21}$ (190°C, 21.6 kg, ISO 1133) 42 g/10 min. $MFR_{21}/MFR_5$ 16.8.

**Kraton™ G1645** is a linear triblock copolymer based on styrene and ethylene/butylene, commercial available from Kraton Corporation.

**MMCP** is a multimodal copolymer and was prepared as follows.

**Catalyst preparation (CAT)**

*Loading of SiO2:*

10 kg of silica (PQ Corporation ES757, calcined 600°C) was added from a feeding drum and inertized in a reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 minutes. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 minutes followed by 60 minutes stirring time (oil circulation temp was set to 25°C). After stirring "dry mixture" was stabilised for 12 hours at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 hours under nitrogen flow 2 kg/h, followed by 13 hours under vacuum (same nitrogen flow with stirring 5 rpm). Dried catalyst was sampled and HC content was measured in the glove box with Sartorius Moisture Analyser, (Model MA45) using thermogravimetric method. Target HC level was < 2 % (actual 1.3 %).

**Polymerization:**

The polymerization was carried out in a Borstar pilot plant with a 3-reactor set-up (loop 1 - loop 2 - GPR) and a prepolymerization loop reactor according to the conditions as given in Table 1.

**Table 1:** Polymerization conditions.

| Prepoly reactor | MMCP-1 | MMCP-2 |
|---|---|---|
| Catalyst | CAT | CAT |
| Catalyst feed (g/h) | 30.0 | 26.6 |
| Temperature (°C) | 50 | 50 |
| Pressure (kPa) | 5624 | 5758 |
| C2 (kg/h) | 4.0 | 4.0 |
| H2 (g/h) | 0.04 | 0.11 |
| C4 (g/h) | 93 | 93.3 |
| Split (wt%) | 3.6 | 3.5 |
| **loop 1 Fraction (A-1)** | | |
| Temperature (°C) | 85 | 85 |
| Pressure (kPa) | 5534 | 5230 |
| C2 conc. (mol-%) | 4.4 | 4.3 |
| H2/C2 ratio (mol/kmol) | 0.93 | 0.60 |
| C4/C2 ratio (mol/kmol) | 72.7 | 32.4 |
| Split (wt%) | 18.7 | 18.6 |
| Density (kg/m$^3$) of loop 1 material (fraction (A-1)) | 942.6 | 945.0 |
| $MFR_2$ (g/10 min) of loop 1 material (fraction (A-1)) | 42 | 28 |
| **loop 2** | | |
| Temperature (°C) | 85 | 85 |
| Pressure (kPa) | 5349 | 5353 |
| C2 conc. (mol-%) | 4.1 | 4.7 |
| H2/C2 ratio (mol/kmol) | 0.6 | 0.6 |
| C4/C2 ratio (mol/kmol) | 50.0 | 25.0 |
| Split (wt%) | 19.8 | 20.4 |
| Density (kg/m$^3$) after loop 2 (component (A)) | 941.2 | 947.2 |
| $MFR_2$ (g/10 min) after loop 2 (component (A)) | 38.4 | 42.0 |
| $MFR_2$ (g/10 min) of loop 2 material (fraction (A-2)) | 35.0 | 65.0 |
| Density (kg/m$^3$) of loop 2 material (fraction (A-2)) | 939.8 | 949.6 |
| **GPR** | | |
| Temperature (°C) | 75 | 75 |
| Pressure (kPa) | 2000 | 2000 |
| H2/C2 ratio (mol/kmol) | 0.72 | 0.47 |
| C6/C2 ratio (mol/kmol) | 10.25 | 12.29 |
| Split (wt%) | 57.9 | 57.5 |
| $MFR_2$ (g/10 min) of GPR material (Component (B)) | 0.03 | 0.02 |
| Density (kg/m$^3$) of GPR material (Component (B)) | 898.9 | 899.5 |

The polymers **(MMCP-1 and MMCP-2)** were mixed with 2400 ppm of Irganox B561 (commercially available from BASF SE) and 270 ppm of Dynamar FX 5922 (commercially available from 3 M) compounded and extruded under nitrogen atmosphere to pellets by using a JSW extruder so that the SEI was 230 kWh/kg and the melt temperature 250°C.

Table 2 summarizes some properties of the **MMCPs.**

**Table 2:** Properties of the multimodal copolymer

| Properties | Unit | **MMCP-1** | **MMCP-2** |
|---|---|---|---|
| $MFR_2$ | g/10 min | 0.6 | 0.53 |
| $MFR_{21}$ | g/10 min | 23.8 | 27.6 |
| $MFR_{21}/MFR_2$ | - | 39.7 | 52.1 |
| $MFR_2(A)/MFR_2(MMCP)$ | - | 64.0 | 79.2 |
| Density | $kg/m^3$ | 916.7 | 919.8 |

**C. Manufacturing of 3-layered films**

3-layered films having the composition shown in Table 3 with a total thickness of 60 μm were produced on a Collin 3 layer lab line (melt temperature: 210°C, BUR 1:2.5, uptake speed: 7 m/min).

In case a blend has been used for one layer, the blending of the components has been done in a ZSK twin screw extruder, before feeding to the Collin 3 layer lab line.

**Table 3:** Composition and properties of 3-layered films.

| | | **IE1** | **CE1** | **CE2** |
|---|---|---|---|---|
| Skin layer (12 μm) | FB5600 (wt%) | 20 | 20 | 20 |
| Core layer (36 μm) | FX1001 (wt%) | 48 | 48 | 48 |
| | MMCP-2 (wt%) | 12 | 12 | 12 |
| Sealing layer (12 μm) | MMCP-1 (wt%) | 16 | 16 | 16 |
| | Notio PN-0040 (wt%) | 4 | - | - |
| | Kraton G1645 (wt%) | - | 4 | - |
| | Queo 7001 (wt%) | - | - | 4 |
| TM (MD) | MPa | 434 | 438 | 417 |
| TM (TD) | MPa | 465 | 459 | 490 |
| DDI | g | 445 | 484 | 413 |
| Haze | % | 40.6 | 41.8 | 38.2 |
| SIT | °C | 50 | 79 | 63 |
| HTF | N | 9.2 | 6.0 | 7.2 |
| TM(MD)*DDI/SIT | °C | 3863 | 2683 | 2734 |
| *wt% based on the weight of the total film.* | | | | |

**E. Discussion of the results**

All produced 3-layered films have the same skin and core layer. The sealing layer of the film according to the present invention **(IE1)** contains a blend of a specific metallocene-catalysed multimodal polyethylene copolymer **(MMCP-1)** and a specific elastomer, whereas the sealing layer of the films according to the comparative examples **(CE1 and CE2)** comprise a blend of the same metallocene-catalysed multimodal polyethylene copolymer (MMCP-1) and a different modifier (Queo or Kraton). The use of different modifiers **(CE1, CE2)** gives a film with significantly worsened sealing properties, i.e. higher SIT and lower hot tack force. Moreover, the use of the specific elastomer in accordance with the present invention allows to obtain films with improved overall behavior (TM(MD)*DDI/SIT).

## Claims

1. A multilayered film comprising a skin layer (SKL), a core layer (CL) and a sealing layer (SL);

   wherein the sealing layer (SL) comprises

   (a) 70 to 95 wt%, based on the total weight of the sealing layer (SL), of a metallocene-catalysed multimodal polyethylene copolymer (MMCP), which consists of an in-situ blend of

   (i) 30.0 to 70.0 wt% based on the total weight of MMCP of an ethylene-1-butene polymer component (A) and
   (ii) 70.0 to 30.0 wt% based on the total weight of MMCP of an ethylene-1-hexene polymer component (B); wherein
   the ethylene-1-butene polymer component (A) has

   • a density (ISO 1183) in the range of 930 to 955 kg/$m^3$;
   • a $MFR_2$ (190°C, 2.16 kg, ISO 1133) in the range of 5.0 to 300 g/10 min; and

   the ethylene-1-hexene polymer component (B) has

   • a density (ISO 1183) in the range of 880 to 915 kg/$m^3$;
   • a $MFR_2$ (190°C, 2.16 kg, ISO 1133) in the range of 0.001 to 0.1 g/10 min; and

   the metallocene-catalysed multimodal polyethylene copolymer (MMCP) has

   • a density (ISO 1183) in the range of 910 to 930 kg/$m^3$;
   • a $MFR_2$ (190°C, 2.16 kg, ISO 1133) in the range of 0.1 to 3.0 g/10 min; and
   • a ratio of the $MFR_{21}$ (190°C, 21.6 kg, ISO 1133) to $MFR_2$ (190°C, 2.16 kg, ISO 1133), $MFR_{21}/MFR_2$, in the range of 15 to 70; and

   (b) 5 to 30 wt%, based on the total weight of the sealing layer (SL), of an elastomer being a terpolymer of propylene, ethylene and 1-butene having

   • a density (ASTM D1505) in the range of 860 to 875 kg/$m^3$;
   • a $MFR_2$ (230°C, 2.16 kg, ASTM D1238) in the range of 1.0 to 10.0 g/10 min;
   • a melting point (measured by DSC according to ISO 11357) in the range of 120 to 170°C;
   • a xylene cold soluble (XCS) content, determined according to ISO 16152 at a temperature of 25°C, in the range of 50.0 to 100 wt%, based on the total weight of the elastomer;
   • a 1-butene content, measured by $^{13}C\{^1H\}$ NMR as described in the experimental part in the range of 5.0 to 30.0 wt%, based on the total weight of the elastomer and an ethylene content, measured by $^{13}C\{^1H\}$ NMR as described in the experimental part in the range of 1.0 to 10.0 wt%, based on the total weight of the elastomer; and

   wherein the weight proportions of components (a) and (b) add up to 100 wt%; and
   wherein the sealing layer forms 5.0 to 30.0% of the total thickness of the multilayered film.

2. The multilayered film according to claim 1, **characterized in that** the ethylene-1-butene polymer component (A) of the metallocene-catalysed multimodal polyethylene copolymer (MMCP) (a) consists of an ethylene polymer fraction (A-1) and an ethylene polymer fraction (A-2); wherein the ethylene polymer fractions (A-1) and (A-2) have a $MFR_2$ (190°C, 2.16 kg, ISO 1133) in the range of 1.0 to 300 g/10 min, preferably of 5.0 to 200 g/10 min, more preferably of 10.0 to 150.0 g/10 min and even more preferably of 15.0 to 120.0 g/10 min, and a density in the range of from 925 to 960 kg/$m^3$, preferably of 925 to 958 kg/$m^3$, more preferably of 930 to 955 kg/$m^3$, and most preferred 935 to 952 kg/$m^3$.

3. The multilayered film according to claim 1 or 2, **characterized in that** the ratio of the $MFR_2$ (190°C, 2.16 kg, ISO 1133) of the ethylene-1-butene polymer component (A) to the $MFR_2$ (190°C, 2.16 kg, ISO 1133) of the final multimodal metallocene catalysed linear low density polyethylene (MMCP) is at least 15.0 to 300, preferably 30.0 to 250, more preferably of 40.0 to 200 and even more preferably of 50.0 to 160 and
   the multimodal copolymer (MMCP) has a ratio of the $MFR_{21}$ (190°C, 21.6 kg, ISO 1133) to $MFR_2$ (190°C, 2.16 kg, ISO

1133), $MFR_{21}/MFR_2$, in the range of from 25 to 65, preferably from 30 to 60, more preferably from 32 to 55.

4. The multilayered film according to any of the preceding claims, **characterized in that**

the ethylene polymer component (A) has a $MFR_2$ (190°C, 2.16 kg, ISO 1133) in the range of 10.0 to 200 g/10 min, preferably of 15.0 to 100 g/10 min, more preferably of 20.0 to 80.0 and a density in the range of 932 to 952 kg/$m^3$, preferably 935 to 950 kg/$m^3$;
the ethylene polymer component (B) has a $MFR_2$ (190°C, 2.16 kg, ISO 1133) in the range of 0.005 to 0.09 g/10 min, preferably of 0.008 to 0.08 g/10 min and more preferably of 0.01 to 0.06 g/10 min and a density in the range of 885 to 912 kg/$m^3$ and more preferably of 890 to 910 kg/$m^3$ and
the $MFR_2$ (190°C, 2.16 kg, ISO 1133) of the multimodal copolymer (MMCP) is in the range of 0.2 to 2.0 g/10 min, preferably 0.3 to 1.5 g/10 min and more preferably of 0.4 to 0.8 g/10 min and the density of the multimodal copolymer (MMCP) is in the range of 912 to 925 kg/$m^3$ and preferably of 915 to 920 kg/$m^3$.

5. The multilayered film according to any one of the preceding claims, **characterized in that** the metallocene-catalysed multimodal copolymer (MMCP) (a) is produced in the presence of a metallocene complex of formula (I):

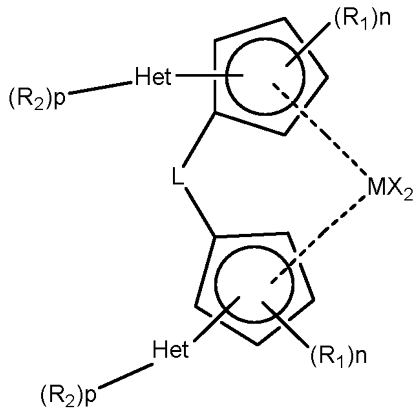

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R_2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

6. The multilayered film according to any one of the preceding claims, **characterized in that** the elastomer b) has

- a density (ASTM D1505) in the range of 862 to 872 kg/$m^3$, more preferably 865 to 870 kg/$m^3$,
- a $MFR_2$ (230°C, 2.16 kg, ASTM D1238) in the range of 2.0 to 8.0 g/10 min, more preferably 3.0 to 7.0 g/10 min;
- a melting point (measured by DSC according to ISO 11357) in the range of 130 to 165°C, more preferably 140 to 162°C;
- a xylene cold soluble (XCS) content, determined according to ISO 16152 at a temperature of 25°C, in the range of 70.0 to 100.0 wt%, more preferably 85.0 to 100.0 wt% based on the elastomer; and
- a 1-butene content, measured by $^{13}C\{^1H\}$ NMR as described in the experimental part in the range of 6.0 to 25.0 wt%, more preferably 7.0 to 20.0 wt%, based on the elastomer and an ethylene content, measured by $^{13}C\{^1H\}$ NMR as described in the experimental part in the range of 2.0 to 8.0 wt%, more preferably 3.5 to 7.0 wt%, based on the total weight of the elastomer.

7. The multilayered film according to any one of the preceding claims, **characterized in that** the elastomer b) has a glass

transition temperature $T_g$ determined by dynamic mechanical analysis according to ISO 6721- below -5 °C, more preferably in the range of -30 to below -5 °C, still preferably in the range of -27 to -10 °C.

**8.** The multilayered film according to any one of the preceding claims, **characterized in that**, the skin layer (SKL) of the multilayered film has a thickness in the range of 1 to 100 μm, preferably in the range of 5 to 80 μm and more preferably in the range of 10 to 15 μm; and/or the core layer (CL) of the multilayered film has a thickness in the range of 10 to 200 μm, preferably in the range of 20 to 80 μm and more preferably in the range of 30 to 45 μm; and the sealing layer (SL) of the multilayered film has a thickness in the range of 1 to 50 μm, preferably in the range of 5 to 25 μm and more preferably in the range of 10 to 15 μm; and the multilayered film has a thickness in the range of 12 to 350 μm, preferably in the range of 40 to 150 μm and more preferably in the range of 50 to 70 μm.

**9.** The multilayered film according to any one of the preceding claims, **characterized in that**, the multilayered film consists of the skin layer (SKL), the core layer (CL) and the sealing layer(SL); whereby

the skin layer (SKL) comprises 90 to 100 wt%, more preferably 92 to 100 wt%, still more preferably 95 to 100 wt% based on the total weight of the skin layer (SKL) and most preferably consists of a high density polyethylene (HDPE) and optionally 0 to 10 wt%, preferably 0 to 8 wt%, more preferably 0 to 5 wt% based on the total weight of the skin layer (SKL) of a LDPE having a density (ISO 1183) in the range of 910 to 930 kg/m$^3$, preferably of 920 to 925 kg/m$^3$ and a $MFR_2$ (190°C, 2.16 kg, ISO 1133) in the range of 0.5 to 4.0 g/10 min and preferably of 0.5 to 1.0 g/10 min,
whereby the high density polyethylene (HDPE) is **characterized by** having

- a density in the range of 945 to 970 kg/m3 (ISO 1183), preferably 948 to 968 kg/m$^3$,
- a $MFR_2$ (190°C, 2.16 kg, ISO 1133) in the range of 0.1 to 3.0 g/10 min,
- a $MFR_5$ (190°C, 5 kg, ISO 1133) in the range of 1.0 to 10.0 g/10 min,
- a $MFR_{21}$ (190°C, 21.6 kg, ISO 1133) of the HDPE in the range of 20.0 to 100 g/10 min and
- a (melt) flow rate ratio $FRR_{21}/_5$ ($MFR_{21}/MFR_5$) of from 5 to 30.

**10.** The multilayered film according to any one of the preceding claims, **characterized in that**, the multilayered film consists of the skin layer (SKL), the core layer (CL) and the sealing layer(SL); and
the core layer (CL) comprises 10 to 35 wt%, more preferably 15 to 30 wt% and still more preferably 18 to 25 wt% based on the total weight of the core layer (CL) of a metallocene-catalysed multimodal polyethylene copolymer (MMCP); and 65 to 90 wt%, more preferably 70 to 85 wt% and still more preferably 75 to 82 wt% based on the total weight of the core layer (CL) of a Ziegler-Natta catalysed linear low density polyethylene being preferably a multimodal alpha-olefin terpolymer, preferably having a density (ISO 1183) in the range of 920 to 950 kg/m$^3$ and a $MFR_5$ (190°C, 2.16 kg, ISO 1133) in the range of 0.1 to 4.0 g/10 min, whereby as metallocene-catalysed multimodal polyethylene copolymer (MMCP) the same or a different MMCP as claimed for the sealing layer (SL) can be used.

**11.** The multilayered film according to claim 10, **characterized in that**, the Ziegler-Natta catalysed linear low density polyethylene (znLLDPE) has a density (ISO 1183) in the range of 920 to 950 kg/m$^3$, preferably of 925 to 945 kg/m$^3$, more preferably of 928 to 942 kg/m$^3$,

a $MFR_5$ (190°C, 5 kg, ISO 1133) in the range of 0.1 to 4.0 g/10 min, preferably of 0.5 to 3.5 g/10 min, more preferably of 0.7 to 3.0 g/10 min, like 0.8 to 2.5 g/10 min and whereby the znLLDPE preferably comprises

(X-1) a lower molecular weight (LMW) homopolymer of ethylene and
(X-2) a higher molecular weight (HMW) terpolymer of ethylene, 1-butene and 1-hexene,

whereby the lower molecular weight (LMW) homopolymer of ethylene (X-1) consists of one or two fractions, i.e. of one or two homopolymers of ethylene.

**12.** The multilayered film according to any one of the preceding claims, **characterized in that** said multilayered film has a sealing initiation temperature (SIT) determined as described in the experimental part on a 3-layered blown film with a thickness of 60 μm of below 75°C, preferably in the range of 45 to 70°C, more preferably in the range of 46°C to 60°C, and even more preferably in the range of 48°C to 58°C and/or a hot tack force (maximum Hot tack force) of 6.2 N up to 15.0 N, preferably in the range of 7.2 to 12.0 N and more preferably in the range of 7.5 to 11.0 N when measured according to ASTM F 1921 - 98 (2004), method B on a three-layered blown film sample (60 μm thickness), modified as described in the experimental part.

**13.** The multilayered film according to any one of the preceding claims, **characterized in that** said multilayered film has a Tensile Modulus in MD (ISO 527-3) in the range of 200 to 600 MPa, preferably in the range of 300 to 550 MPa and more preferably in the range of 350 to 500 MPa; and/or a Tensile Modulus in TD (ISO 527-3) in the range of 250 to 650 MPa, preferably in the range of 300 to 600 MPa and more preferably in the range of 400 to 550; and/or a Dart Drop Strength (ISO 7765-1) in the range of 200 to 1000 g, preferably in the range of 300 to 800 g, and more preferably in the range of 400 to 600 g, both properties measured on a three-layered blown film sample (60 μm thickness).

**14.** The multilayered film according to any one of the preceding claims, **characterized in that** said multilayered film has a relation between mechanical properties and sealing properties according to formula (II):

$$\frac{Tensile\ Modulus\ (MD)[MPa]*DDI(g)}{SIT\ [°C]} > 2800 \quad (II)$$

determined on 60 μm test blown film, wherein the Tensile Modulus (TM) in machine direction is measured according to ISO 527-3 at 23°C on 60 μm test blown films, DDI is the dart-drop impact strength determined according to ISO 7765-1:1988 on a 60 μm test blown film and SIT is the sealing initiation temperature measured as described in the experimental part on a 60 μm test blown film.

**15.** Use of the multilayered film according to any of the preceding claims as packing material, preferably for food and/or medical products.

**Patentansprüche**

**1.** Mehrschichtfolie umfassend eine Hautschicht (SKL), eine Kernschicht (CL) und eine Dichtungsschicht (SL); wobei die Dichtungsschicht (SL) umfasst

(a) 70 bis 95 Gew.-%, bezogen auf das Gesamtgewicht der Dichtungsschicht (SL), eines Metallocen-katalysierten multimodalen Polyethylen-Copolymers (MMCP), das aus einer in-situ-Mischung besteht aus

(i) 30,0 bis 70,0 Gew.-%, bezogen auf das Gesamtgewicht des MMCP, einer Ethylen-1-Buten-Polymerkomponente (A) und
(ii) 70,0 bis 30,0 Gew.-%, bezogen auf das Gesamtgewicht von MMCP, einer Ethylen-1-Hexen-Polymerkomponente (B); wobei
die Ethylen-1-Buten-Polymerkomponente (A) eine

- eine Dichte (ISO 1183) im Bereich von 930 bis 955 kg/m$^3$;
- eine $MFR_2$ (190°C, 2,16 kg, ISO 1133) im Bereich von 5,0 bis 300 g/10 min; aufweist, und

die Ethylen-1-Hexen-Polymerkomponente (B)

- eine Dichte (ISO 1183) im Bereich von 880 bis 915 kg/m$^3$;
- eine $MFR_2$ (190°C, 2,16 kg, ISO 1133) im Bereich von 0,001 bis 0,1 g/10 min; aufweist, und

das Metallocen-katalysierte multimodale Polyethylen-Copolymer (MMCP)

- eine Dichte (ISO 1183) im Bereich von 910 bis 930 kg/m$^3$;
- eine $MFR_2$ (190°C, 2,16 kg, ISO 1133) im Bereich von 0,1 bis 3,0 g/10 min; und
- ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 15 bis 70; aufweist, und

(b) 5 bis 30 Gew.-%, bezogen auf das Gesamtgewicht der Dichtungsschicht (SL), eines Elastomers, das ein Terpolymer aus Propylen, Ethylen und 1-Buten ist, das

- eine Dichte (ASTM D1505) im Bereich von 860 bis 875 kg/m$^3$;
- eine $MFR_2$ (230°C, 2,16 kg, ASTM D1238) im Bereich von 1,0 bis 10,0 g/10 min;
- einen Schmelzpunkt (gemessen durch DSC gemäß ISO 11357) im Bereich von 120 bis 170°C;

- einen xylolkaltlöslichen Gehalt (XCS), bestimmt nach ISO 16152 bei einer Temperatur von 25°C, im Bereich von 50,0 bis 100 Gew.-%, bezogen auf das Gesamtgewicht des Elastomers;
- einen 1-Buten-Gehalt, gemessen durch 13C{1H} NMR, wie im experimentellen Teil beschrieben, im Bereich von 5,0 bis 30,0 Gew.-%, bezogen auf das Gesamtgewicht des Elastomers, und einen Ethylengehalt, gemessen durch 13C{1H} NMR, wie im experimentellen Teil beschrieben, im Bereich von 1,0 bis 10,0 Gew.-%, bezogen auf das Gesamtgewicht des Elastomers; und

wobei die Gewichtsanteile der Komponenten (a) und (b) sich zu 100 Gew.-% addieren; und
wobei die Dichtungsschicht 5,0 bis 30,0 % der Gesamtdicke der Mehrschichtfolie ausmacht.

**2.** Mehrschichtfolie nach Anspruch 1, **dadurch gekennzeichnet, dass** die Ethylen-1-Buten-Polymerkomponente (A) des Metallocen-katalysierten multimodalen Polyethylen-Copolymers (MMCP) (a) aus einer Ethylen-Polymerfraktion (A-1) und einer Ethylen-Polymerfraktion (A-2) besteht; wobei die Ethylen-Polymerfraktionen (A-1) und (A-2) einen $MFR_2$ (190°C, 2,16 kg, ISO 1133) im Bereich von 1,0 bis 300 g/10 min, bevorzugt von 5,0 bis 200 g/10 min, mehr bevorzugt von 10,0 bis 150,0 g/10 min und noch mehr bevorzugt von 15,0 bis 120,0 g/10 min, und eine Dichte im Bereich von 925 bis 960 kg/$m^3$, bevorzugt von 925 bis 958 kg/$m^3$, mehr bevorzugt von 930 bis 955 kg/$m^3$ und am meisten bevorzugt von 935 bis 952 kg/$m^3$ aufweisen.

**3.** Mehrschichtfolie nach Anspruch 1 oder 2, **dadurch gekennzeichnet, dass** das Verhältnis des $MFR_2$ (190°C, 2,16 kg, ISO 1133) der Ethylen-1-Buten-Polymerkomponente (A) zum $MFR_2$ (190°C, 2,16 kg, ISO 1133) des endgültigen Metallocen-katalysierten linearen multimodalen Polyethylen-Copolymers niedriger Dichte (MMCP) mindestens 15,0 bis 300, bevorzugt 30,0 bis 250, mehr bevorzugt 40,0 bis 200 und noch mehr bevorzugt 50,0 bis 160 ist und das multimodale Copolymer (MMCP) ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 25 bis 65, bevorzugt von 30 bis 60, mehr bevorzugt von 32 bis 55 aufweist.

**4.** Mehrschichtfolie nach einem der vorhergehenden Ansprüche, **dadurch gekennzeichnet, dass**

die Ethylenpolymerkomponente (A) eine $MFR_2$ (190°C, 2,16 kg, ISO 1133) im Bereich von 10,0 bis 200 g/10 min, bevorzugt von 15,0 bis 100 g/10 min, mehr bevorzugt von 20,0 bis 80,0, und eine Dichte im Bereich von 932 bis 952 kg/$m^3$, bevorzugt von 935 bis 950 kg/$m^3$, aufweist;
die Ethylenpolymerkomponente (B) eine $MFR_2$ (190°C, 2,16 kg, ISO 1133) im Bereich von 0,005 bis 0,09 g/10 min, bevorzugt von 0,008 bis 0,08 g/10 min und mehr bevorzugt von 0,01 bis 0,06 g/10 min und eine Dichte im Bereich von 885 bis 912 kg/$m^3$ und bevorzugt von 890 bis 910 kg/$m^3$, aufweist und
der $MFR_2$ (190°C, 2,16 kg, ISO 1133) des multimodalen Copolymers (MMCP) im Bereich von 0,2 bis 2,0 g/10 min, bevorzugt von 0,3 bis 1,5 g/10 min und mehr bevorzugt von 0,4 bis 0,8 g/10 min ist und die Dichte des multimodalen Copolymers (MMCP) im Bereich von 912 bis 925 kg/$m^3$ und bevorzugt von 915 bis 920 kg/$m^3$ ist.

**5.** Mehrschichtfolie nach einem der vorhergehenden Ansprüche, **dadurch gekennzeichnet, dass** das Metallocen-katalysierten multimodalen Copolymer (MMCP) (a) in Gegenwart eines Metallocenkomplexes der Formel (I) hergestellt wird:

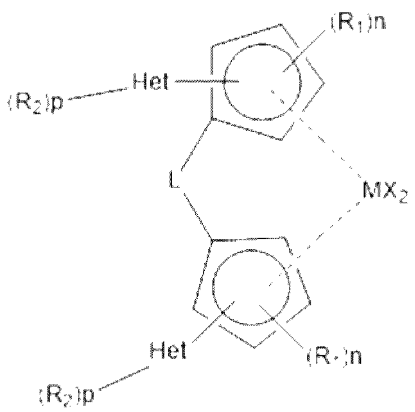

(I)

wobei jedes X unabhängig ein Halogenatom, eine $C_{1-6}$-Alkylgruppe, $C_{1-6}$-Alkoxygruppe, Phenyl- oder Benzylgruppe ist;

jedes Het unabhängig eine monocyclische heteroaromatische Gruppe, die mindestens ein Heteroatom, ausgewählt aus O oder S enthält, ist;
L $-R'_2Si-$ ist, wobei jedes R' unhabhängig $C_{1-20}$-Kohlenwasserstoffrest oder $C_{1-10}$-Alkylgruppe, das mit Alkoxygruppe mit 1 bis 10 Kohlenstoffatomen substituiert ist, ist;
M Ti, Zr or Hf ist;
jedes $R_1$ gleich oder anders ist, und eine $C_{1-6}$-Alkylgruppe oder $C_{1-6}$-Alkoxygruppe ist;
jedes n 1 bis 2 ist;
jedes $R_2$ gleich oder unterschiedlich ist, und eine $C_{1-6}$-Alkylgruppe, $C_{1-6}$-Alkoxygruppe oder - $Si(R)_3$-Gruppe ist;
jedes R $C_{1-10}$-Alkyl- oder Phenylgruppe ist, die optional mit 1 bis 3 $C_{1-6}$-Alkylgruppen substituiert ist; und jedes p 0 bis 1 ist.

**6.** Mehrschichtfolie nach einem der vorhergehenden Ansprüche, **dadurch gekennzeichnet, dass** das Elastomer b)

- eine Dichte (ASTM D1505) im Bereich von 862 bis 872 kg/m$^3$, bevorzugt 865 bis 870 kg/m$^3$,
- eine $MFR_2$ (230°C, 2,16 kg, ASTM D1238) im Bereich von 2,0 bis 8,0 g/10 min, bevorzugt 3,0 bis 7,0 g/10 min;
- einen Schmelzpunkt (gemessen durch DSC gemäß ISO 11357) im Bereich von 130 bis 165°C, bevorzugt 140 bis 162°C;
- einen xylolkaltlöslichen Gehalt (XCS), bestimmt nach ISO 16152 bei einer Temperatur von 25°C, im Bereich von 70,0 bis 100,0 Gew.-%, bevorzugt 85,0 bis 100,0 Gew.-%, bezogen auf das Elastomer; und
- einen 1-Buten-Gehalt, gemessen durch 13C{1H} NMR, wie im experimentellen Teil beschrieben, im Bereich von 6,0 bis 25,0 Gew.-%, bevorzugt 7,0 bis 20,0 Gew.-%, bezogen auf das Elastomer, und einen Ethylengehalt, gemessen durch 13C{1H} NMR, wie im experimentellen Teil beschrieben, im Bereich von 2,0 bis 8,0 Gew.-%, bevorzugt 3,5 bis 7,0 Gew.-%, bezogen auf das Gesamtgewicht des Elastomers; aufweist.

**7.** Mehrschichtfolie nach einem der vorhergehenden Ansprüche, **dadurch gekennzeichnet, dass** das Elastomer b) eine Glasübergangstemperatur Tg, bestimmt durch dynamisch-mechanische Analyse nach ISO 6721-, unter -5 °C, bevorzugt im Bereich von -30 bis unter -5 °C, mehr bevorzugt im Bereich von - 27 bis -10 °C, aufweist.

**8.** Mehrschichtfolie nach einem der vorhergehenden Ansprüche, **dadurch gekennzeichnet, dass**,

die Hautschicht (SKL) der Mehrschichtfolie eine Dicke im Bereich von 1 bis 100 μm, bevorzugt im Bereich von 5 bis 80 μm und mehr bevorzugt im Bereich von 10 bis 15 μm, aufweist; und/oder
die Kernschicht (CL) der Mehrschichtfolie eine Dicke im Bereich von 10 bis 200 μm, bevorzugt im Bereich von 20 bis 80 μm und mehr bevorzugt im Bereich von 30 bis 45 μm, aufweist; und
die Dichtungsschicht (SL) der Mehrschichtfolie eine Dicke im Bereich von 1 bis 50 μm, bevorzugt im Bereich von 5 bis 25 μm und mehr bevorzugt im Bereich von 10 bis 15 μm, aufweist; und
die Mehrschichtfolie eine Dicke im Bereich von 12 bis 350 μm, bevorzugt im Bereich von 40 bis 150 μm und mehr bevorzugt im Bereich von 50 bis 70 μm aufweist.

**9.** Mehrschichtfolie nach einem der vorhergehenden Ansprüche, **dadurch gekennzeichnet, dass**,

die Mehrschichtfolie aus der Hautschicht (SKL), der Kernschicht (CL) und der Dichtungsschicht (SL) besteht; wobei
die Hautschicht (SKL) 90 bis 100 Gew.-%, bevorzugt 92 bis 100 Gew.-%, mehr bevorzugt 95 bis 100 Gew.-%, bezogen auf das Gesamtgewicht der Hautschicht (SKL) umfasst, und am meisten bevorzugt aus einem Polyethylen hoher Dichte (HDPE), und optional 0 bis 10 Gew.-%, bevorzugt 0 bis 8 Gew.-%, mehr bevorzugt 0 bis 5 Gew.-%, bezogen auf das Gesamtgewicht der Hautschicht (SKL), aus einem LDPE mit einer Dichte (ISO 1183) im Bereich von 910 bis 930 kg/m$^3$, bevorzugt von 920 bis 925 kg/m$^3$ und einem $MFR_2$ (190°C, 2. 16 kg, ISO 1133) im Bereich von 0,5 bis 4,0 g/10 min und bevorzugt von 0,5 bis 1,0 g/10 min, besteht,
wobei das Polyethylen hoher Dichte (HDPE) **gekennzeichnet ist durch** das Aufweisen

- einer Dichte im Bereich von 945 bis 970 kg/m$^3$ (ISO 1183), bevorzugt 948 bis 968 kg/m$^3$,
- eines $MFR_2$ (190°C, 2,16 kg, ISO 1133) im Bereich von 0,1 bis 3,0 g/10 min,
- eines $MFR_5$ (190°C, 5 kg, ISO 1133) im Bereich von 1,0 bis 10,0 g/10 min,
- eines $MFR_{21}$ (190°C, 21,6 kg, ISO 1133) des HDPE im Bereich von 20,0 bis 100 g/10 min und
- eines (Schmelz-)Fließratenverhältnis $FRR_{21}/_5$ ($MFR_{21}/MFR_5$) von 5 bis 30.

**10.** Mehrschichtfolie nach einem der vorhergehenden Ansprüche, **dadurch gekennzeichnet, dass**,

die Mehrschichtfolie aus der Hautschicht (SKL), der Kernschicht (CL) und der Dichtungsschicht (SL) besteht; und die Kernschicht (CL) umfasst 10 bis 35 Gew.-%, bevorzugt 15 bis 30 Gew.-% und mehr bevorzugt 18 bis 25 Gew.-%, bezogen auf das Gesamtgewicht der Kernschicht (CL) eines metallocen-katalysierten multimodalen Polyethylencopolymers (MMCP); und 65 bis 90 Gew.-%, bevorzugt 70 bis 85 Gew.-% und noch mehr bevorzugt 75 bis 82 Gew.-%, bezogen auf das Gesamtgewicht der Kernschicht (CL) eines Ziegler-Natta-katalysierten linearen Polyethylens niedriger Dichte, , das bevorzugt ein multimodales Alpha-Olefin-Terpolymer ist, das bevorzugt eine Dichte (ISO 1183) im Bereich von 920 bis 950 kg/m$^3$ und einen $MFR_5$ (190°C, 2,16 kg, ISO 1133) im Bereich von 0,1 bis 4,0 g/10 min, wobei als Metallocen-katalysierten multimodalen Polyethylen-Copolymer (MMCP) das gleiche oder ein unterschiedliches MMCP wie für die Dichtungsschicht (SL) beansprucht verwendet werden kann.

**11.** Mehrschichtfolie nach Anspruch 10, **dadurch gekennzeichnet, dass** das Ziegler-Natta-katalysierte lineare Polyethylen niedriger Dichte (znLLDPE) eine Dichte (ISO 1183) im Bereich von 920 bis 950 kg/m$^3$, bevorzugt von 925 bis 945 kg/m$^3$, mehr bevorzugt von 928 bis 942 kg/m$^3$,

eine $MFR_5$ (190°C, 5 kg, ISO 1133) im Bereich von 0,1 bis 4,0 g/10 min, bevorzugt von 0,5 bis 3,5 g/10 min, mehr bevorzugt von 0,7 bis 3,0 g/10 min, wie etwa 0,8 bis 2,5 g/10 min, aufweist, und wobei das znLLDPE bevorzugt

(X-1) ein Homopolymer aus Ethylen mit niedrigerem Molekulargewicht (LMW)und
(X-2) ein Terpolymer aus Ethylen, 1-Buten und 1-Hexen mit höherem Molekulargewicht (HMW), umfasst,

wobei das Homopolymer aus Ethylen mit niedrigerem Molekulargewicht (LMW) (X-1) aus einer oder zwei Fraktionen besteht, d.h. aus einem oder zwei Homopolymeren aus Ethylen.

**12.** Mehrschichtfolie nach einem der vorhergehenden Ansprüche, **dadurch gekennzeichnet, dass** die Mehrschichtfolie eine Dichtungsbeginntemperatur (SIT), bestimmt wie im experimentellen Teil beschrieben, an einer dreischichtigen Blasfolie mit einer Dicke von 60 μm, von unter 75°C, bevorzugt im Bereich von 45 bis 70°C, mehr bevorzugt im Bereich von 46°C bis 60°C und noch mehr bevorzugt im Bereich von 48°C bis 58°C ; und/oder eine Heißklebekraft (maximale Heißklebekraft) von 6,2 N bis zu 15,0 N, bevorzugt im Bereich von 7,2 bis zu 12,0 N und mehr bevorzugt im Bereich von 7,5 bis 11,0 N, gemessen nach ASTM F 1921-98 (2004), Methode B an einer dreischichtigen Blasfolienprobe (60 μm Dicke), modifiziert wie im experimentellen Teil beschrieben, aufweist.

**13.** Mehrschichtfolie nach einem der vorhergehenden Ansprüche, **dadurch gekennzeichnet, dass** die Mehrschichtfolie einen Zugmodul in MD (ISO 527-3) im Bereich von 200 bis 600 MPa, bevorzugt im Bereich von 300 bis 550 MPa und mehr bevorzugt im Bereich von 350 bis 500 MPa aufweist; und/oder einen Zugmodul in TD (ISO 527-3) im Bereich von 250 bis 650 MPa, bevorzugt im Bereich von 300 bis 600 MPa und mehr bevorzugt im Bereich von 400 bis 550; und/oder eine Dart-Drop-Durchstoßfestigkeit (ISO 7765-1) im Bereich von 200 bis 1000 g, bevorzugt im Bereich von 300 bis 800 g und mehr bevorzugt im Bereich von 400 bis 600 g aufweist, wobei beide Eigenschaften an einer dreischichtigen Blasfolienprobe (60 μm Dicke) gemessen werden.

**14.** Mehrschichtfolie nach einem der vorhergehenden Ansprüche, **dadurch gekennzeichnet, dass** die Mehrschichtfolie ein Verhältnis zwischen mechanischen Eigenschaften und Dichtungseigenschaften gemäß Formel (II) aufweist:

$$\frac{Tensile\ Modulus\ (MD)[MPa] * DDI(g)}{SIT\ [°C]} > 2800 \quad \text{(II)}$$

bestimmt an 60-μm-Testblasfolien, wobei der Zugmodul (TM) in Maschinenrichtung nach ISO 527-3 bei 23°C an 60-μm-Testblasfolien gemessen wird, DDI die Dart-Drop-Durchstoßfestigkeit ist, die nach ISO 7765-1:1988 an einer 60-μm-Testblasfolie bestimmt wird, und SIT die Dichtungsbeginntemperatur ist, die wie im experimentellen Teil beschrieben, an einer 60-μm-Testblasfolie gemessen wird.

**15.** Verwendung der Mehrschichtfolie nach einem der vorhergehenden Ansprüche als Verpackungsmaterial, bevorzugt für Lebensmittel und/oder medizinische Produkte.

## Revendications

**1.** Film multicouche comprenant une couche de peau (SKL), une couche centrale (CL) et une couche de scellement (SL) ; dans lequel la couche de scellement (SL) comprend

(a) 70 à 95 % en poids, par rapport au poids total de la couche de scellement (SL), d'un copolymère de polyéthylène multimodal catalysé par métallocène (MMCP), qui consiste en un mélange in-situ de

(i) 30,0 à 70,0 % en poids par rapport au poids total du MMCP d'un composant polymère d'éthylène-1-butène (A) et
(ii) 70,0 à 30,0 % en poids par rapport au poids total du MMCP d'un composant polymère d'éthylène-1-hexène (B) ; dans lequel

le composant polymère d'éthylène-1-butène (A) a

- une densité (ISO 1183) dans la plage de 930 à 955 $kg/m^3$ ;
- un $MFR_2$ (190°C, 2,16 kg, ISO 1133) dans la plage de 5,0 à 300 g/10 min ; et

le composant polymère d'éthylène-1-hexène (B) a

- une densité (ISO 1183) dans la plage de 880 à 915 $kg/m^3$ ;
- un $MFR_2$ (190°C, 2,16 kg, ISO 1133) dans la plage de 0,001 à 0,1 g/10 min ; et

le copolymère de polyéthylène multimodal catalysé par métallocène (MMCP) a

- une densité (ISO 1183) dans la plage de 910 à 930 $kg/m^3$ ;
- un $MFR_2$ (190°C, 2,16 kg, ISO 1133) dans la plage de 0,1 à 3,0 g/10 min ; et
- un rapport entre le $MFR_{21}$ (190°C, 21,6 kg, ISO 1133) et le $MFR_2$ (190°C, 2,16 kg, ISO 1133), $MFR_{21}/MFR_2$, dans la plage de 15 à 70 ; et

(b) 5 à 30 % en poids, par rapport au poids total de la couche de scellement (SL), d'un élastomère étant un terpolymère de propylène, d'éthylène et de 1-butène ayant

- une densité (ASTM D1505) dans la plage de 860 à 875 $kg/m^3$ ;
- un $MFR_2$ (230°C, 2,16 kg, ASTM D1238) dans la plage de 1,0 à 10,0 g/10 min ;
- un point de fusion (mesuré par DSC selon ISO 11357) dans la plage de 120 à 170°C ;
- une teneur en xylène soluble à froid (XCS), déterminée selon ISO 16152 à une température de 25°C, dans la plage de 50,0 à 100 % en poids, par rapport au poids total de l'élastomère ;
- une teneur en 1-butène, mesurée par $^{13}C\{^1H\}$ NMR comme décrit dans la partie expérimentale dans la plage de 5,0 à 30,0 % en poids, par rapport au poids total de l'élastomère et une teneur en éthylène, mesurée par $^{13}C\{^1H\}$ NMR comme décrit dans la partie expérimentale dans la plage de 1,0 à 10,0 % en poids, par rapport au poids total de l'élastomère ; et

dans lequel les proportions en poids des composants (a) et (b) s'additionnent jusqu'à 100 % en poids ; et
dans lequel la couche de scellement forme 5,0 à 30,0 % de l'épaisseur totale du film multicouche.

**2.** Film multicouche selon la revendication 1, **caractérisé en ce que** le composant polymère d'éthylène-1-butène (A) du copolymère de polyéthylène multimodal catalysé par métallocène (MMCP) (a) est constitué d'une fraction de polymère d'éthylène (A-1) et d'une fraction de polymère d'éthylène (A-2) ; dans lequel les fractions de polymère d'éthylène (A-1) et (A-2) ont un $MFR_2$ (190°C, 2,16 kg, ISO 1133) dans la plage de 1,0 à 300 g/10 min, préférablement de 5,0 à 200 g/10 min, plus préférablement de 10,0 à 150,0 g/10 min et encore plus préférablement de 15,0 à 120,0 g/10 min, et une densité dans la plage de 925 à 960 $kg/m^3$, préférablement de 925 à 958 $kg/m^3$, plus préférablement de 930 à 955 $kg/m^3$, et particulièrement préférée de 935 à 952 $kg/m^3$.

**3.** Film multicouche selon la revendication 1 ou 2, **caractérisé en ce que** le rapport entre le $MFR_2$ (190°C, 2,16 kg, ISO 1133) du composant polymère d'éthylène-1-butène (A) et le $MFR_2$ (190°C, 2,16 kg, ISO 1133) du polyéthylène basse densité linéaire multimodal final catalysé par métallocène (MMCP) est d'au moins 15,0 à 300, préférablement de 30,0 à 250, plus préférablement de 40,0 à 200 et encore plus préférablement de 50,0 à 160 et

le copolymère multimodal (MMCP) a un rapport entre le $MFR_{21}$ (190°C, 21,6 kg, ISO 1133) et le $MFR_2$ (190°C, 2,16 kg, ISO 1133), $MFR_{21}/MFR_2$, dans la plage de 25 à 65, préférablement de 30 à 60, plus préférablement de 32 à 55.

**4.** Film multicouche selon l'une quelconque des revendications précédentes, **caractérisé en ce que**

le composant polymère d'éthylène (A) a un $MFR_2$ (190°C, 2,16 kg, ISO 1133) dans la plage de 10,0 à 200 g/10 min, préférablement de 15,0 à 100 g/10 min, plus préférablement de 20,0 à 80,0, et une densité dans la plage de 932 à 952 kg/$m^3$, préférablement de 935 à 950 kg/$m^3$ ;
le composant polymère d'éthylène (B) a un $MFR_2$ (190°C, 2,16 kg, ISO 1133) dans la plage de 0,005 à 0,09 g/10 min, préférablement de 0,008 à 0,08 g/10 min, et plus préférablement de 0,01 à 0,06 g/10, et une densité dans la plage de 885 à 912 kg/$m^3$, et plus préférablement de 890 à 910 kg/$m^3$ et
le $MFR_2$ (190°C, 2,16 kg, ISO 1133) du copolymère multimodal (MMCP) est dans la plage de 0,2 à 2,0 g/10 min, préférablement de 0,3 à 1,5 g/10 min et plus préférablement de 0,4 à 0,8 g/10 min, et la densité du copolymère multimodal (MMCP) est dans la plage de 912 à 925 kg/$m^3$ et préférablement de 915 à 920 kg/$m^3$.

**5.** Film multicouche selon l'une quelconque des revendications précédentes, **caractérisé en ce que** le copolymère multimodal catalysé par métallocène (MMCP) (a) est produit en présence d'un complexe métallocène de formule (I) :

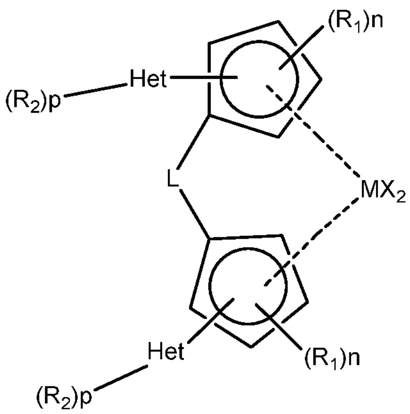
(I)

dans lequel chaque X est indépendamment un atome d'halogène, un groupe $C_{1-6}$-alkyle, un groupe $C_{1-6}$-alkoxy, un groupe phényle ou benzyle ;
chaque Het est indépendamment un groupe hétéroaromatique monocyclique contenant au moins un hétéroatome choisi parmi O ou S ; L est -$R'_2$Si-, chaque R' étant indépendamment $C_{1-20}$-hydrocarbyle ou $C_{1-10}$-alkyle substitué par un alcoxy ayant de 1 à 10 atomes de carbone ;
M est Ti, Zr ou Hf ;
chaque $R_1$ est identique ou différent et est un groupe $C_{1-6}$-alkyle ou un groupe $C_{1-6}$-alcoxy ;
chaque n est de 1 à 2 ;
chaque $R_2$ est identique ou différent et est un groupe $C_{1-6}$-alkyle, un groupe $C_{1-6}$-alcoxy ou un groupe -$Si(R)_3$ ;
chaque R est un groupe $C_{1-10}$-alkyle ou phényle éventuellement substitué par 1 à 3 groupes $C_{1-6}$-alkyle ; et chaque p est de 0 à 1.

**6.** Film multicouche selon l'une quelconque des revendications précédentes, **caractérisé en ce que** l'élastomère b) a

• une densité (ASTM D1505) dans la plage de 862 à 872 kg/$m^3$, plus préférablement de 865 à 870 kg/$m^3$,
• un $MFR_2$ (230°C, 2,16 kg, ASTM D1238) dans la plage de 2,0 à 8,0 g/10 min, plus préférablement de 3,0 à 7,0 g/10 min ;
• un point de fusion (mesuré par DSC selon ISO 11357) dans la plage de 130 à 165°C, plus préférablement de 140 à 162°C ;
• une teneur en xylène soluble à froid (XCS), déterminée selon ISO 16152 à une température de 25°C, dans la plage de 70,0 à 100,0 % en poids, plus préférablement de 85,0 à 100,0 % en poids par rapport à l'élastomère ; et
• une teneur en 1-butène, mesurée par $^{13}C\{^1H\}$ NMR comme décrite dans la partie expérimentale, dans la plage de 6,0 à 25,0 % en poids, plus préférablement de 7,0 à 20,0 % en poids, par rapport à l'élastomère, et une teneur en éthylène, mesurée par $^{13}C\{1H\}$ NMR comme décrit dans la partie expérimentale dans la plage de 2,0 à 8,0 % en poids, plus préférablement de 3,5 à 7,0 % en poids, par rapport au poids total de l'élastomère.

**7.** Film multicouche selon l'une quelconque des revendications précédentes, **caractérisé en ce que** l'élastomère b) a une température de transition vitreuse $T_g$ déterminée par analyse mécanique dynamique selon ISO 6721-inférieure à -5 °C, plus préférablement comprise entre -30 et inférieure à -5 °C, encore plus préférablement comprise entre -27 et -10 °C.

**8.** Film multicouche selon l'une quelconque des revendications précédentes, **caractérisé en ce que**

la couche de peau (SKL) du film multicouche a une épaisseur dans la plage de 1 à 100 µm, préférablement dans la plage de 5 à 80 µm et plus préférablement dans la plage de 10 à 15 µm ; et/ou
la couche centrale (CL) du film multicouche a une épaisseur dans la plage de 10 à 200 µm, préférablement dans la plage de 20 à 80 µm et plus préférablement dans la plage de 30 à 45 µm ; et
la couche de scellement (SL) du film multicouche a une épaisseur dans la plage de 1 à 50 µm, préférablement dans la plage de 5 à 25 µm et plus préférablement dans la plage de 10 à 15 µm ; et
le film multicouche a une épaisseur dans la plage de 12 à 350 µm, préférablement dans la plage de 40 à 150 µm et plus préférablement dans la plage de 50 à 70 µm.

**9.** Film multicouche selon l'une quelconque des revendications précédentes, **caractérisé en ce que**

le film multicouche est constitué de la couche de peau (SKL), de la couche centrale (CL) et de la couche de scellement (SL) ; dans lequel
la couche de peau (SKL) comprend 90 à 100 % en poids, plus préférablement de 92 à 100 % en poids, encore plus préférablement de 95 à 100 % en poids par rapport au poids total de la couche de peau (SKL) et est constituée particulièrement préférée d'un polyéthylène haute densité (HDPE) et éventuellement de 0 à 10 % en poids, préférablement de 0 à 8 % en poids, plus préférablement de 0 à 5 % en poids par rapport au poids total de la couche de peau (SKL) d'un LDPE ayant une densité (ISO 1183) dans la plage de 910 à 930 kg/$m^3$, préférablement de 920 à 925 kg/$m^3$, et un $MFR_2$ (190°C, 2,16 kg, ISO 1133) dans la plage de 0,5 à 4,0 g/10 min et préférablement de 0,5 à 1,0 g/10 min,
dans lequel le polyéthylène haute densité (HDPE) est **caractérisé par le fait qu'**il a

- une densité dans la plage de 945 à 970 kg/$m^3$ (ISO 1183), préférablement de 948 à 968 kg/$m^3$,
- un $MFR_2$ (190°C, 2,16 kg, ISO 1133) dans la plage de 0,1 à 3,0 g/10 min,
- un $MFR_5$ (190°C, 5 kg, ISO 1133) dans la plage de 1,0 à 10,0 g/10 min,
- un $MFR_{21}$ (190°C, 21,6 kg, ISO 1133) du HDPE dans la plage de 20,0 à 100 g/10 min et
- un rapport de débit (de fusion) $FRR_{21}/_5$ ($MFR_{21}/MFR_5$) de 5 à 30.

**10.** Film multicouche selon l'une quelconque des revendications précédentes, **caractérisé en ce que**

le film multicouche est constitué de la couche de peau (SKL), de la couche centrale (CL) et de la couche de scellement (SL) ; et
la couche centrale (CL) comprend 10 à 35 % en poids, plus préférablement de 15 à 30 % en poids et encore plus préférablement de 18 à 25 % en poids par rapport au poids total de la couche centrale (CL) d'un copolymère de polyéthylène multimodal catalysé par métallocène (MMCP) ; et de 65 à 90 % en poids, plus préférablement de 70 à 85 % en poids et encore plus préférablement de 75 à 82 % en poids par rapport au poids total de la couche centrale (CL) d'un polyéthylène basse densité linéaire catalysé par Ziegler-Natta étant préférablement un terpolymère alpha-oléfine multimodal, ayant préférablement une densité (ISO 1183) dans la plage de 920 à 950 kg/$m^3$ et un $MFR_5$ (190°C, 2,16 kg, ISO 1133) dans la plage de 0,1 à 4,0 g/10 min, dans lequel le même ou un autre copolymère de polyéthylène multimodal catalysé par métallocène (MMCP) que celui revendiqué pour la couche de scellement (SL) peut être utilisé comme MMCP.

**11.** Film multicouche selon la revendication 10, **caractérisé en ce que** le polyéthylène basse densité linéaire catalysé par Ziegler-Natta (znLLDPE) a une densité (ISO 1183) dans la plage de 920 à 950 kg/$m^3$, préférablement de 925 à 945 kg/$m^3$, plus préférablement de 928 à 942 kg/$m^3$,
un $MFR_5$ (190°C, 5 kg, ISO 1133) dans la plage de 0,1 à 4,0 g/10 min, préférablement de 0,5 à 3,5 g/10 min, plus préférablement de 0,7 à 3,0 g/10 min, tel que de 0,8 à 2,5 g/10 min, et dans lequel le znLLDPE comprend de préférence

(X-1) un homopolymère de poids moléculaire inférieur (LMW) d'éthylène et
(X-2) un terpolymère de poids moléculaire supérieur (HMW) d'éthylène, de 1-butène et de 1-hexène, dans lequel

l'homopolymère de poids moléculaire inférieur (LMW) d'éthylène (X-1) est constitué d'une ou de deux fractions, c'est-à-dire d'un ou de deux homopolymères d'éthylène.

**12.** Film multicouche selon l'une quelconque des revendications précédentes, **caractérisé en ce que** ledit film multicouche a une température d'initiation du scellage (SIT) déterminée comme décrit dans la partie expérimentale sur un film soufflé à trois couches d'une épaisseur de 60 μm inférieure à 75°C, préférablement dans la plage de 45 à 70°C, plus préférablement dans la plage de 46°C à 60°C, et encore plus préférablement dans la plage de 48°C à 58°C et/ou une force d'adhérence à chaud (force d'adhérence à chaud maximale) de 6,2 N à 15,0 N, préférablement dans la plage de 7,2 à 12,0 N et plus préférablement dans la plage de 7,5 à 11,0 N lorsqu'elle est mesurée selon ASTM F 1921 - 98 (2004), procédé B sur un échantillon de film soufflé à trois couches (60 μm d'épaisseur), modifié comme décrit dans la partie expérimentale.

**13.** Film multicouche selon l'une quelconque des revendications précédentes, **caractérisé en ce que** ledit film multicouche a un module de traction en MD (ISO 527-3) dans la plage de 200 à 600 MPa, préférablement dans la plage de 300 à 550 MPa et plus préférablement dans la plage de 350 à 500 MPa ; et/ou un module de traction en TD (ISO 527-3) dans la plage de 250 à 650 MPa, préférablement dans la plage de 300 à 600 MPa et plus préférablement dans la plage de 400 à 550 ; et/ou une résistance à testeur d'impact falling dart (ISO 7765-1) dans la plage de 200 à 1000 g, préférablement dans la plage de 300 à 800 g et plus préférablement dans la plage de 400 à 600 g, ces deux propriétés étant mesurées sur un échantillon de film soufflé à trois couches (60 μm d'épaisseur).

**14.** Film multicouche selon l'une quelconque des revendications précédentes, **caractérisé en ce que** ledit film multicouche a une relation entre des propriétés mécaniques et des propriétés de scellage selon la formule (II) :

$$\frac{Tensile\ Modulus\ (MD)[MPa]*DDI(g)}{SIT\ [°C]} > 2800\ (II)$$

déterminé sur un film soufflé d'essai de 60 μm, dans lequel le module de traction (TM) dans le sens machine est mesuré selon ISO 527-3 à 23°C sur des films soufflés d'essai de 60 μm, DDI est la résistance à testeur d'impact falling dart déterminée selon ISO 7765-1:1988 sur un film soufflé d'essai de 60 μm et SIT est la température d'initiation du scellage mesurée comme décrit dans la partie expérimentale sur un film soufflé d'essai de 60 μm.

**15.** Utilisation du film multicouche selon l'une quelconque des revendications précédentes comme matériau d'emballage, préférablement pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- EP 4116091 A1
- EP 0575465 A1
- WO 2012061168 A1
- WO 2012061168 A
- WO 2008104371 A
- WO 2006037603 A
- WO 2016198273 A1
- WO 2021009189 A1
- WO 2021009190 A1
- WO 2021009191 A1
- WO 2021009192 A1
- WO 03066698 A
- WO 2008034630 A

### Non-patent literature cited in the description

- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 2 08, 2128
- **POLLARD, M.** ; **KLIMKE, K.** ; **GRAF, R** ; **SPIESS, H.W.** ; **WILHELM, M.** ; **SPERBER, O** ; **PIEL, C.** ; **KAMINSKY, W.** *Macromolecules*, 2004, vol. 37, 813
- **FILIP, X.** ; **TRIPON, C.** ; **FILIP, C**. *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D** ; **CONG, R.** ; **TAHA, A.** ; **BAUGH, D.** ; **WINNIFORD, B., J.** *Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253